Europäisches Patentamt

(19) European Patent Office

Office européen des brevets

(11) Publication number: **0 022 881**
**B1**

# (12) EUROPEAN PATENT SPECIFICATION

(45) Date of publication of patent specification: 24.10.84

(21) Application number: 79102553.9

(22) Date of filing: 19.07.79

(51) Int. Cl.³: **D 21 C 3/16,** D 21 C 1/00,
D 21 B 1/38, D 21 H 3/18,
A 23 K 1/12, C 08 H 5/00,
C 09 K 17/00

(54) Accelerated pulping process.

(43) Date of publication of application:
28.01.81 Bulletin 81/04

(45) Publication of the grant of the patent:
24.10.84 Bulletin 84/43

(84) Designated Contracting States:
AT BE DE FR GB IT NL SE

(56) References cited:
CH-A- 415 701
DE-C- 278 492
DE-C- 307 087
DE-C- 410 824
DE-C- 546 104
DE-C- 727 152
FR-A-1 479 952
FR-A-1 486 491
FR-A-2 333 892
LU-A- 73 770
US-A-1 933 445
US-A-4 053 645

ABSTRACT BULLETIN OF THE INSTITUTE OF
PAPER CHEMISTRY, vol. 39, no. 4 October
1968, page 353, ref. 3516, Appleton, Wisconsin
US

(73) Proprietor: Prior, Eric S.
830 Signal Bay
Coos Bay Oregon 97420 (US)

(72) Inventor: Prior, Eric S.
830 Signal Bay
Coos Bay Oregon 97420 (US)

(74) Representative: Dost, Wolfgang, Dr.rer.nat.,
Dipl.-Chem. et al
Patent- und Rechtsanwälte Bardehle-
Pagenberg-Dost-Altenburg & Partner Postfach
86 06 20
D-8000 München 86 (DE)

Courier Press, Leamington Spa, England.

# 0 022 881

**Description for the Contracting States: AT BE SE**

This invention relates to an improved process of making fibre in a form ranging from a moderately digested product fit for animal feed to pulps that can be utilized as conventional semi-chemical, chemical types for packaging papers or fully delignified pulps for bleaching from fibrous, ligno-cellulosic raw material. More particularly, it relates to a nitration pulping process using nitric acid in which the time required for nitration and the second step extraction of the nitrated ligneous components in the fibrous raw material is substantially shortened due to the inclusion in the nitric acid of a small amount of an aluminum compound, and by use of the inherent flexibility of the process time, temperature and chemical concentration, the utilization of controlled delignification to produce animal feed, building board, packing boards and paper.

So far as I am aware, nitric acid pulping processes, of which many have been proposed, have never been commercially successful for various reasons, chief among which is the relatively long chemical treatment time that they required far exceeding the present day conventional methods. Shortened times were possible if strong nitric acid was used, or if pressurized vessels and high temperatures were employed, but those conditions create other problems such as excessive and explosive emission of toxic nitrogen oxide fumes and damage to the cellulosic fibre structure. Moreover, recovery of the acid has not been possible, and the use of relatively concentrated nitric acid, e.g. 15 to 42% by wt.$HNO_3$, becomes therefore prohibitively expensive. In short, the nitric acid pulping processes heretofore proposed have offered no advantages and many disadvantages over present day conventional systems. As recently as 1960 a published comprehensive review on nitric acid pulping by Crown Zellerbach Corporation stated that while nitric acid was specific for the reaction with lignin, the use of acid reagent was excessive and uneconomic, and pollution problems remained unsolved.

I have now discovered that in a chemical pulping process involving impregnation of particulate, fibrous, lignocellulosic raw material with nitric acid which may be or not be followed by alkaline extraction from the material of the resulting nitrated lignin, leaving softened, particularly defibered cellulosic structures which can be completely defibered by mechanical pulping means, the total time required for the nitration and extraction steps can be shortened considerably by including a small amount of aluminium sulphate (paper maker's alum) in the nitric acid.

Accordingly, the invention relates to a process for pulping ligno-cellulosic material wherein said material is treated with aqueous nitric acid which process if characterized by using an aqueous nitric acid solution having an $HNO_3$ concentration of 0.15 to 9.0 wt. % and containing an aluminum compound in an amount of at least 0.01 parts by weight of aluminum ions per each 10 parts by weight of $HNO_3$.

In the process of the present invention the nitric acid impregnation liquor is augmented with a nitration accelerating amount of an aluminum compound, preferably aluminum sulphate, preferably about 0.8 to 1.3 parts of aluminum sulphate per each 10 parts by weight of $HNO_3$. As stated above, the presence of the aluminum sulphate in the nitric acid serves to shorten dramatically the time required to dissolve the nitrated lignin in the subsequent alkaline extraction step. Normal usage is 1.0 part of the aluminum sulphate per each 10 parts by weight of $HNO_3$. (100%).

Examples for such aluminum compounds are aluminum chloride, aluminum oxides, such as $Al_2O_3 . 1/2 H_2O$, aluminum phosphates, aluminum nitrate, etc. These salts should be soluble in the aqueous nitric acid used in the pulping process.

With aluminum chloride it is preferred to use a hydrated product or a hydrated product with additional water to avoid violent reactions when adding it to the pulping liquor. To avoid excessive hydrolysis of the aluminum chloride to aluminum hydroxide or oxide hydrate which must be redissolved later, nitric acid can be added. When using aluminum nitrate as starting material the introduction of foreign ions is avoided.

The stated aluminum compounds should be used in amounts leading to similar aluminum ion concentrations in the pulping liquor as compared to the use of aluminum sulphate (paper makers alum) described hereinbefore which alum is used in an amount of 0.8 to 1.3 parts by weight per each 10 parts by weight of $HNO_3$ (100%). Comparing the molecular weights of the alum $(Al_2(SO_4)_3 . 18 H_2O = 666)$ with, for example, $Al_2O_3 . 1/2 H_2O$ (111), it follows that for achieving the same aluminum ion concentration in the pulping liquor the aluminum oxide should be used in an amount of 1/6 compared to the alum. In terms of aluminum ion concentration (or aluminum concentration) this means that it should be from 0.065 to 0.105 parts by weight of aluminum ions per each 10 parts of $HNO_3$ (100%).

While it has been noted that there is a minimum amount of aluminum ions to achieve a remarkable effect, e.g. 0,01, 0.02, 0.03 or 0.04 parts by weight of aluminum ions per each 10 parts of $HNO_3$, there is actually no strict upper limit, and the aluminum ion concentration could well go above 0.105, for example up to 0.15, 0.2, or even more.

It has been found, however, that with exceeding a certain aluminum level no further advantage as to time reduction is obtained so that higher amounts are not desirable under economic and environmental pollution point of views. The preferred range is 0.065 to 0.105 parts by weight of aluminum ions per each 10 parts by weight of $HNO_3$, a value of about 0.08 giving desirable results in the practice of the process of the invention.

2

Besides reduction in process time, a further point of view is the inherent strength characteristics of the fiber obtained according to the process of the invention which characteristics can be influenced by the amount of aluminum. Thus, for every kind of ligno-cellulosic material, e.g. bagasse or bamboo, the optimum amount of aluminum can vary depending on what reduction in process time and what fiber characteristics are demanded.

The process of this invention uses only 0.15—9.0% nitric acid in relation to fibre yield which, together with the alkali used for delignification, is no more than with conventional methods of pulping without chemical recovering systems while eliminating the complex requirements of recovery and/or manufacture of the cooking liquors. Furthermore the nitrating solution can, except for that absorbed in the fibre structure, be recovered virtually intact and recycled. More importantly, unlike previous attempts with nitric acid, this new process does not dissolve the lignin content of fibrous structures in the acid stage.

Conventional pulp mills require high investment due to the high temperatures and pressure involved, and if water and air pollution is controlled and chemical recovery is practiced costs are substantially higher. The process of this invention uses simple chemicals available in crystalline or dissolved form, does not require superatmospheric pressure, or temperatures over 100°C, offers minimal problems of air and water pollution, and offers economic usability of the products normally wasted by burning or dumping.

While the precise time required for the nitration-extraction operation is dependent upon the variables of particle thickness, temperature and reagent concentration, it can be said for the process of the present invention that it generally enables one to perform the nitration-extraction operation somewhere in the range from 20 minutes minimum for high yield wood chemical pulps for packaging papers and boards, to a maximum time of 50 minutes for easily bleached pulps without using pressure and with temperatures not exceeding 100°C. Those times are to be compared to the conventional sulphite process times of 6.25 hours and 7.50 hours and the sulphate process times of 2.5 and 5.0 hours, respectively, at high pressures and temperatures, as set forth in the following table I:

TABLE I

Pulping Processes Compared

| | Liquor Concentration, Wt. % | | Total Cooking Time | Temperature, °C | Pressure, P.S.I.G. (kPa, gauge) | Fibre Species | Total Yield % |
|---|---|---|---|---|---|---|---|
| 1. Casey, "Pulp and Paper" Vol. 1, p. 169 | | | | | | | |
| Sulphite-Bleach Grade | | | | | | | |
| Calcium Base | 6.0 | | 6.25 hrs. | 140 | 80 (552) | Western Conifer | 45.4 |
| Ammonia Base | 6.0 | | 7.50 hrs. | 146 | 80 (552) | Western Conifer | 45.0 |
| 2. Casey, pp. 230—264 | | | | | | | |
| Sulphate — High Yield | 18.5 | | 2.50 hrs. (1) | 170 | 140 (965) | U.S. So. Pine | 60.0 |
| Sulphate — Bleachable | 22.0 | | 5.00 hrs. (1) | 160 | 100 (690) | U.S. So. Pine | 43.0 |
| (1) includes time to bring to temperature | | | | | | | |
| 3. TAPPI CA Report, 52 pp. 17—19 | | | | | | | |
| Bagasse — Soda Process | 6.5 | | 26.50 min. (2) | 170 | 114 (787) | Bagasse | 56.0 |
| (2) includes cooking time in blow tank | | | | | | | |
| 4. TAPPI CA Report 52, pp. 26—27 | | | | | | | |
| Bamboo — Kraft Process | 17—19 | | 1.25 hrs. | 150 | 85 (586) | Bamboo | 56.0 |
| 5. Accelerated Pulping | | | | | | | |
| Examples (Invention) | HNO$_3$ | NaOH | | | | | |
| High Yield Grade | 5.5 / | 0.3 | 30 min. | 85—100 | None | U.S. So. Pine | 56.0 |
| Bleachable Grade | | | | | | | |
| (1st sequence) | 3.0 / | 0.3 | 30 min. | 85—100 | None | Norway Spruce | 45.0 |
| (2nd sequence) | 1.5 / | 0.1 | 20 min. | 85—100 | None | | |
| Bagasse | 0.8 / | 0.2 | 30 min. | 85—100 | None | Bagasse | 52.0 |
| Bamboo | 3.0 / | 0.2 | 30 min. | 85—100 | None | Bamboo | 44.0 |

0 022 881

Although the invention is described below mainly referring to the embodiment involving an alkaline extraction of nitrated lignin after the nitration step, it is recognized that, though preferable, an alkaline extraction is not absolutely necessary for the production of paper pulps. However, the addition of alkali is necessary for the production of animal feeds and would be normally used in the production of semi-chemical pulp where maximum defiberization for minimum chemical treatment is desired.

The ability of the present process to be conducted under atmospheric pressure eliminates the need of explosive release of pressure that is used in conventional chemical pulp systems to defibre the fibrous structures within chips or chopped materials. The basic preservation of the fibrous structure permits easy recycling of the fibrous structure through an additional gentle cooking cycle, if required, and easy drainage of cooking liquor and washing out of the residual black liquor leaving the fibrous structure substantially intact. Defiberization is then accomplished mechanically with gentleness and rapidity, with minimum loss of fibre length and degradation of basic fibre structure. Additionally, the defiberization can be closely controlled to preserve long thin fibre bundles from fibrous structures made up of very short (under 0.5 mm) fibres such as straw thus improving strength and drainage characteristics.

All forms of ligno-cellulosic materials can be subjected to the pulping process of the present invention. That includes, without limitation, woody materials such as U.S. Southern pine, spruce, beech and bamboo, as well as grassy materials which find minor usage such as straws, bagasse and kenaf. In addition to these normally used sources of paper making fibre, other, now wasted, fibrous plants as rape seed straw and rice husks which resist conventional pulping methods can easily be reduced to potentially useful fibre by this process. High yield shrub growth such as coppice willow found extensively in Ireland and presently unused produces, including its bark, as an acceptable, clean and economic paper making fibre. Besides such virgin materials, the process of the present invention can be used to delignify and further defibre paper wastes, such as waste corrugated boxes containing semi-chemical board. Finally, it becomes practical to economically pulp small accumulations of wood slab waste and sawdust which are most often burned.

The raw material should be in particulate form before being submitted to the nitration step. Virgin plant material, for example, should be chopped, crushed, chipped or flaked. Paper wastes should be mechanically pulped in water to the defibered state, for example to obtain a slurry containing about 7 to 9 wt.% cellulose. When it is wood that is to be pulped, the required nitration extraction time will be shorter and the pulp more uniform if the wood particles are thinner. It has been found especially advantageous to use wood flakes, i.e. particles about 0.3 to 0.8 mm thick obtained by cutting the log tangentially to the circumference. Flaking is the cutting process used in manufacturing particleboard. At the present time the paper manufacturing industry uses wood chips almost exclusively, the thickness of which is usually in the range of about 6 to 10 mm. Horsepower consumption for the flaking of logs is roughly equivalent to that for chipping, as are production levels and flexibility in handling short or long or different diameter logs. The use of flakes does require higher cubic handling and cooking capacities than does chips, but flaking is nonetheless economically acceptable in the pulping process of this invention because high pressure pressurized cooking vessels with restricted volumes are not required.

Use of wood flakes, rather than the thicker chips, speeds nitric acid impregnation and also shortens the time required for outward diffusion of dissolved lignin in the subsequent alkaline extraction step. Additionally, flaking is accomplished by cutting around the circumference of the log, much as veneers are made, whereas chipping is performed by cutting at the end of the log, the fibre length is essentially preserved in flakes and the fibre ends are not crushed. Chipping, on the other hand, fractures the fibres and crushes their ends. The more intact fibre structures and greater exposed surface of the flakes are more easily penetrated by the chemicals used in the nitration and extraction steps of the present process. The fibres produced from flakes are marginally shorter than those of conventional chips.

Where a pulp is required for rough papers, i.e. brown or packaging papers and boards, conventional chips can be used after subjecting them to conventional crushing which reduces them to rough splinters 1.5—3.0 mm thick, 4.0—8.0 mm wide and 25 mm long.

The nitration (cooking) of the ligno-cellulosic raw material is accomplished by submerging or wetting with recycled acid the material in a sufficient amount of aqueous nitric acid at elevated temperature, preferably 85 to 100°C to penetrate the fibrous structure and react with the lignin. In order to permit the use of an open vessel for the nitration step, without the emission of harmful nitrogen oxide vapors, there is used a very dilute nitric acid having an $HNO_3$ concentration of 0.15 to 9.0 weight percent, e.g. 0.15 to 5.5 weight percent or 0.3 to 5.5 weight percent, preferably less than 5.5 weight percent and most preferred less than 5 weight percent. It can be preferred to subject the lignocellulosic raw material to an impregnation step before the cooking-nitration step. The impregnation is done with a dilute concentration of the cooking liquor at low temperatures (e.g. 70°C or below, e.g. 50°C or below) and serves three purposes:

a) Utilization of drained concentrated liquor after the cooking process together with the dilute cooking liquor from the washing process,

b) conservation of heat by recycling liquor, and

c) even moisture distribution throughout the fibrous structure before cooking.

Whereas the cooking step is not necessarily preceded by an impregnation step, an impregnation step is always followed by a cooking step.

The preferred acid strength in the cooking-nitration step depends upon the nature of the ligno-cellulosic raw material being pulped. For U.S. Southern pine, for example, which is relatively high in lignin content (over 30 wt.%), and contains a high percentage of resins and waxes it is preferred to use an $HNO_3$ concentration of at least 4.5 or 5.5 wt.%. Wheat straw, on the other hand, is low in lignin content (about 15 wt.%) and is preferably cooked and nitrated with nitric acid having an $HNO_3$ concentration of only 0.8 to 1.5 wt.% for production of chemical pulp. These concentrations are based on a normal nitration period of 15 minutes and production of chemical type pulp.

Where impregnation periods and longer time is used the acid concentration can be drastically reduced. For example, spruce flakes-impregnation 30 minutes at 0.5% concentration plus cooking and nitration, respectively, 45 minutes at 1.75%. Where a pulp of lower purity (i.e. less delignification) is required the said concentration can be reduced, as in animal feed or semi-chemical pulp. As a practical matter it will usually be woody plant material that is twice subjected to the cooking-nitration/lignin-extraction sequence, since grassy plant materials and paper wastes can have their ligneous components nitrated and almost completely extracted in one sequence using relatively stronger, but still dilute, nitric acid, and obtain pulp of adequate cellulosic purity and easy bleachability. Even with woody raw materials, a single nitration-extraction sequence is all that is required where the pulp product is to be used to make linerboard and lower brightness papers and not to make high purity cellulose or high brightness paper.

The amount of nitric acid used in the nitration step should be sufficient to completely react by submergence or contact by recirculation the particulate ligno-cellulosic material and adequate on a stoichiometric basis to nitrate all of the lignin content of the raw materials. This will usually mean formation of a mixture of 5 parts of liquid acid to 1.0 part of dry wood to 10 parts of liquid acid for 1.0 part of dry grass fibre (straw). Where the acid liquor can be circulated and heated indirectly lower ratios can be used. Additionally the acid can be sprayed or foamed in low concentration on grassy fibres to form an intimate mixture to a composite moisture content of 35 to 50% and then subjected to heat for reaction at once or at later date — six months or more without degradation.

The temperature at which the nitric acid cooking step is performed should be adequate to effect nitration of the lignin, but is preferable not so high as to cause degradation of the cellulosic fibres. Temperatures within the range of 85 to 100°C, in particular 85 to 95°C, are preferred. Since the nitration-extraction portion of the process of the present invention can be performed in such a short period of time, it is possible to conduct both of those steps under atmospheric pressure conditions, although superatmospheric pressures, e.g. from 10 to 35 p.s.i.g. (70—241 kPa gauge), can be used if it is desired to shorten the nitration time slightly but chiefly to provide ease of processing on a continuous basis. The improvement provided by the present invention is independent of whether the process is conducted under atmospheric pressure or at elevated pressures.

The introduction of a non pressure system is designed specifically for use in new and relatively smally pulping installations (10—50 tons (10,000—50,000 kg) per day) throughout the world. However, it is recognized that the requirement for larger production units can be met and that in many instances existing pulp mill equipment could ge utilized to reduce investment costs in preventing present pollution problems.

All present systems use high pressures and temperatures coupled with long cooking periods for fully defibered or chemical pulps from either wood or grasses. It has been found that by cooking with light pressures (15—35 psig (103—241 kPa gauge)) while holding temperatures at 110°C or below, preferably below 100°C (most preferably 95°C) the nitration period can be shortened to 5—7 minutes for wood flakes, straw, etc. Conventional sized wood chips can also be readily pulped although the cooking time period is extended to one hour requiring two nitration steps with a preliminary defibering step between. Alternatively, the chips can be crushed previous to filling the digester and the nitration step limited to one step which additionally avoids the possibility of over and under reacted fibrous structures. These methods of using light pressures with either wood flakes or chips makes practical, for example, the conversion of existing sulphite pulp mills to this process. Other pulping systems such as the "Kamyr" or "Pandia"-system, which are continuous, operation at high pressure, 150—175 psig (1.03—1.21 MPa gauge) are also adaptable for processing wood chips in one stage producing a semi-chemical type after normal mechanical defibering or full chemical pulp. Thus, in a special embodiment of the inventive process the nitration step is operated at a pressure of 100 to 150 psig (0.60—1.03 MPa gauge) when using as starting material crushed wood chips as used in conventional processes today. See Table IIa "Comparative $HNO_3$ Pressure Nitration Cycles . Normal Chemical or Delignified Pulp."

Additionally it has been found that the use of pressure permits full defibering of the fibrous structure in the nitration stage without production of black liquor thus avoiding the lignin alkali extraction phase. This is accomplished by raising the $HNO_3$ liquor concentration by 2.5—3.5% over that required for the nitration-alkali delignification sequence and extending the time of reaction slightly, 3—5 minutes. Thus, without using pressure, i.e. conducting the process under approximately atmospheric pressure conditions, the $HNO_3$ liquor concentration is preferably at most 5.5 weight percent, in particular at most 5 weight percent. When employing pressure, the $HNO_3$ concentration can go up to 9.0 weight percent and preferably it is no more than 7.5 or 7.0 weight percent. Of course, the lower concentrations as stated for the pressurized nitration step can be advantageously used.

TABLE IIa

Comparative HNO$_3$ Pressurized Nitration Cycles, Normal Chemical or Delignified Pulp with Alkali Stage

A. Non Pressure System — Wood Flakes or Equivalent

|  |  | Pine | Spruce | Beech | Straw |
|---|---|---|---|---|---|
| Cooking Time | Minutes | 15 | 15 | 15 | 15 |
| Temperature | °C | 85 | 85 | 85 | 85 |
| Liquor Concentration | % | 5.5 | 5.0 | 4.0 | 1.0 |

B. Pressure 15 — 35 p.s.i.g. (103 — 241 kPa gauge) — Wood Flakes or Equivalent

|  |  | Pine | Beech | Straw | Bamboo |
|---|---|---|---|---|---|
| Cooking Time | Minutes | 7 | 7 | 5 | 7 |
| Temperature | °C | 110 | 110 | 110 | 110 |
| Liquor Concentration | % | 5.5 | 3.5 | 0.5 | 2.5 |

C. Pressure 15 — 35 p.s.i.g. (103 — 241 kPa gauge) — Wood Chips

|  |  | Spruce | Beech |
|---|---|---|---|
| Cooking Time | Minutes | 45 | 45 |
| Temperature | °C | 110 | 110 |
| Liquor Concentration | % | 4.5 | 3.5 |
| Difiberization |  | x | x |
| Time — Non Pressure | Minutes | 15 | 15 |
| Temperature | °C | 85 | 85 |
| Liquor Concentration | % | 2.5 | 2.0 |

D. Pressure 100 — 150 p.s.i.g. (0.70 — 1.03 MPa gauge) — Wood Chips

|  |  | Spruce | Beech | Beech Semi-Chemical |
|---|---|---|---|---|
| Cooking Time | Minutes | 45 | 45 | 10 |
| Temperature | °C | 110 | 110 | 110 |
| Liquor Concentration | % | 4.5 | 3.5 | 3.0 |
| Defiberization |  | — | — | x |

The process without delignification produces a fibre for different and limited end use papers than that of the delignified type fiber. It is of very light colour, high yield and can be easily bleached to high brightness levels, but not by normal alkaline bleaching. The reduced handling of the fibrous structure greatly improves its drainage properties and facilitates washing which is a major problem today in bleaching short fibre structures such as straw.

In all theses use of pressure it is not necessary to vent any gases; in fact it is economic that with the gases be contained and retained to create a false pressure and keeping operating temperatures below 100°C thus avoiding cellulose degradation. The degree of false pressure created is dependent on acid concentration.

See following Table IIb "Comparative $HNO_3$ Pressure Nitration Cycles. No Delignification Stage". Where additional pressure is needed as in the "Kamyr"-process to facilitate operation it can be obtained with air injections.

The ability to conduct the nitration step at atmospheric pressure means that substantially open vessels can be employed providing substantial savings in equipment cost compared to conventional superatmospheric pulping processes. Although an open vessel can be employed for the nitration step, it is preferred to maintain closure with recycling of vapors to prevent possible troublesome emission of nitrogen oxide vapors. Present environmental laws in the U.S.A. permit a maximum nitrogen oxide emission level of only 185 ppm. The precise temperature at which nitrogen oxide will be released from the slurry in the nitration step will depend upon the concentration of the nitric acid, since the higher the acid concentration, the lower will be the temperature at which nitrogen oxide vapor emissions will occur.

0 022 881

TABLE IIb

Comparative HNO₃ Pressurized Nitration Cycles, Alkali Delignification Stage Eliminated

A. Pressure 15 – 35 p.s.i.g. (103 – 241 kPa gauge) – Wood Flakes or Equivalent

| | | Chemical Pulp | | | |
|---|---|---|---|---|---|
| | | Pine | Beech | Straw | Bamboo |
| Cooking Time | Minutes | 10 | 10 | 6 | 10 |
| Temperature | °C | 110 | 110 | 110 | 110 |
| Liquor Concentration | % | 9.0 | 5.5 | 2.5 | 5.0 |

B. Pressure 100 – 150 p.s.i.g. (0.70 – 1.03 MPa gauge) – Wood Chips

| | | Chemical Pulp | |
|---|---|---|---|
| | | Spruce | Beech |
| Cooking Time | Minutes | 45 | 45 |
| Temperature | °C | 110 | 110 |
| Liquor Concentration | % | 8.0 | 5.5 |

C. Pressure 35 – 150 p.s.i.g. (0.24 – 1.03 MPa gauge) – Wood Chips

| | | Semi-Chemical Pulp Mixed Hardwoods |
|---|---|---|
| | | Beech |
| Cooking Time | Minutes | 10 |
| Temperature | °C | 100 |
| Liquor Concentration | % | 4.0 |

By way of further explanation, nitric acid decomposes at about 86°C into water and nitrogen oxide gas, which is potentially lethal and can be explosive. The nitrogen gas is somewhat soluble in water, however: about 130 ml will dissolve in a litre of cold water, about 660 ml will dissolve in a liter of hot water. If nitric acid having an $HNO_3$ concentration greater than about 3.0 wt.% is heated in the presence of cellulose to above about 65°C then an exothermic reaction with the cellulose will result. For this reason, where an impregnation step becomes preferable to economize on nitric acid consumption through recycling of partly spent or diluted acid it is desirable to maintain low temperatures, e.g. 50°C or below. Temperatures over 85°C will produce nitrogen oxide gas which depending on the acid concentration will be more than the water can hold in solution and will have to be contained. When an open vessel is being used to conduct the nitration step in the process of the present invention, it will usually be preferred to employ a temperature no higher than about 90°C or 95°C. However, as stated herein before, when operating the nitration step under pressure a temperature of up to 110°C, preferably up to 100°C, can be employed.

It is an outstanding advantage of the process of the present invention that it can be performed in non-pressure vessels in short time periods, without causing air pollution problems.

The nitration step, and indeed the entire process of the present invention, can be carried out continuously, semi-continuously, or batchwise, whichever is desired. Selection of equipment will of course depend upon that choice. It is generally more economical to conduct the process continuously in which event the nitration step can advantageously be conducted in some type of screw conveyor unit. Batchwise nitrations can be carried out quite well in a hydrapulper making possible the economic operation of very small mills.

The nitric acid impregnation and cooking steps are conducted for a time sufficient to produce the required residual level of the ligneous components of the ligno-cellulosic raw material after extraction of the lignin. If the nitration-extraction sequence is performed twice, each nitration step can be conducted for a shorter period that if it were performed just once. The time required to effect the desired degree of nitration is dependent, of course, on the strength of the nitric acid used, as well as the temperature employed, since higher acid strengths and higher temperatures promote the nitration reaction.

Additional considerations are the type and particle size of the ligno-cellulosic material being processed. In general, with the process of the present invention the total nitration time, whether performed in one step or broken down into two nitration-extracton sequences, can be as short as 5 minutes or extended to 45 minutes. For straw or bagasse which will go into dry storage before lignification a simple spray or foam application at lower levels of acid concentration at room tempeatures is all that is necessary. Following the nitration step the ligno-cellulosic material is separated from the nitric acid solution and preferably washed with water to remove surface acid. The wash water is preferably hot, e.g. at a temperature of 85 to 100°C and is used in minimal amounts. One efficient method of separating and washing the nitrated ligno-cellulosic material is by spindraining the slurry in a rotary dryer, followed by water washing the solids in the same vessel. Another method, if a continuous system is used, is draining followed by reverse flow washing. Alternatively, draining, followed by flooding with wash water and a second draining can be used.

The separated nitric acid is advantageously recycled to the nitration step to be used again, as is the acidic wash water. Both solutions will be relatively clear, but may be slightly coloured due to the presence of small amounts of dissolved material. The recycled nitric acid stream will be fortified with concentrated nitric acid and with fresh aluminum sulphate so as to restore the concentrations of those reagents to the desired levels.

The nitrated fibrous structures remain intact and appear to be essentially the same as when those particles were introduced to the nitric acid submersion step, except for some softening and a slightly darker colour. The nitrated fibrous structures can be held in storage for months without either deteriorating or causing problems in the lignin extraction and defibering steps which follow. This storability feature can be of special advantage in the case where straw, bagasse or similar grassy plants are to be pulped. Grassy plants are usually harvested during relatively short seasons, causing temporary, seasonal surges in supply of that raw material to the pulp mills. Since the demand for the finished pulp is relatively constant, however, it becomes necessary to periodically store large quantities of the excess ligno-cellulosic raw material. This presents a problem because grassy plants are particularly susceptible to bacterial or fungi attack during storage. By the process of the present invention the excess raw material can be nitrated without delay, by spraying or foaming a dilute solution of acid to obtain intimate, overall contact with the fibre to a total moisture content of 30 to 50%, and held in storage in that form without being degraded by bacteria. Extended periods of storage have been experienced to up to one year in contact with the acid at a moisture level of 30—50% permitting usage of a very low percentage of acid to dry fibre, i.e. 1—3%.

The nitrated ligno-cellulosic material is next submerged in an alkaline, aqueous extraction solution, e.g. a solution of sodium, potassium, and/or ammonium hydroxide, so as to dissolve most of the nitrated lignin out of the fibrous structure. The lignin nitrate is substantially insoluble in acidic aqueous media, but is readily dissolved in basic aqueous media, for example having a pH of about 12.

The alkaline concentration of the extraction solution must be sufficient that the solution will leach out by dissolving most of the nitrated ligneous material in the fibrous structure. Usually it is preferred to use an alkaline strength (NaOH, KOH, or $NH_4OH$) of 0.1 to 0.5 wt.%. If the nitration-extraction sequence is performed twice on the ligno-cellulosic material, then the alkaline strength used in the second extraction step need not be as high as that employed for the first extraction. Often the concentration of the alkaline solution used in the second nitration-extraction sequence will be about one-fifth to one-half that which is used in the initial sequence. The alkaline consumption is basically one of bringing the starting pH to about 12, and is therefore somewhat dependent on the concentration of residual acid remaining. The amount of the alkaline extraction solution used should be adequate to completely submerge the ligno-cellulosic material and dissolve most of the nitrated ligneous components. Usually the amount of alkaline extraction solution used will provide a slurry containing 5 to 8 wt.% of the cellulosic fibre.

The temperature at which the alkaline extraction step is conducted should be sufficiently high to effect dissolution of most of the nitrated ligneous material. Preferably a temperature of 75 to 100°C is used. Temperatures as low as 15°C can be used which will extend the time necessary for delignification. These low temperatures are particularly important in producing animal feed or partially defibered pulp from agricultural residues. Where straw as an example for an agricultural residue has been sprayed with nitric acid and held in storage, delignification with alkali under 50°C will produce a fully defibered pulp. The alkaline extraction step is best performed under atmospheric pressure conditions, thereby permitting the use of an open vessel and avoidance of expensive high pressure equipment. If desired, however, for example to further shorten the extraction time or utilize existing pressurized equipment, high temperatures and superatmospheric pressures, e.g. up to 10 or 15 p.s.i.g. (70 or 103 kPa gauge) can be used for the extraction. Increased time and temperatures using alkaline solutions will result normally in some degradation of the cellulose.

As discussed above with regard to the nitration step, the nitration-extraction sequence can be conducted just once, or it can be repeated, in which event each extraction step can be performed for a shorter period of time than if it were performed just once. It will be recognized that the time required to effect the desired degree of extraction is dependent on the particle size and type of the ligno-cellulosic material, and the temperature at which the extraction is conducted. In general, however, the total time required for the lignin-extraction, whether performed in one step or broken down into two extractions, will be no more than about 20 minutes, often being within the range of 5 to 15 minutes.

If an open vessel is used for the extraction step, it can advantageously be a hydrapulper. If a closed vessel is used, a screw conveyor may be preferred. After treatment with the alkaline extraction solution, the fibrous, cellulosic material is separated from the lignin-containing solution, preferably in a high density press. If, however, the fibre bundles are to be subjected to a second nitration-extraction sequence, then it will suffice to just drain off the extraction liquor. After the extraction step, the alkaline solution contains dissolved ligneous components and is reddish brown in colour. It is usually referred to as "black liquor." During start-up of the process all of the separated black liquor, together with the alkaline wash water, can be returned to the extraction vessel for reuse. As the process is continued, however, the content of dissolved solids in the black liquor will grow to a maximum tolerable concentration, e.g., somewhere in the range of 10 to 25 wt.%, depending upon the quality of product desired. At that point an appropriate portion of the black liquor should be regularly removed and replaced with make up clear alkali liquor in order to prevent further increase in the concentration of the dissolved solids. The black liquor purge stream could be disposed of by various means such as by dumping as waste, or by concentrating and burning. Alternatively, the black liquor purge stream can be combined with the completely defibered pulp to supply ligneous binder for fiber web products prepared from the pulp, especially paperboard.

When the alkali lignin extraction process is complete the pH of the black liquor will be almost neutral, e.g. from 7.5 to 8.5 which is far lower than that of conventional alkaline processes the pH of which is usually in the range of 12—14. This factor of almost neutral pH makes the black liquor substantially more amenable to being handled in subsequent chemical processing. Sulphite acid systems produce black liquor in a pH range of 1.0—2.0.

Additionally, the black liquor has a very low range of $BOD_5$ (Biological Oxygen Demand — 5 day) and COD (Chemical Oxygen Demand) which together with its chemical make up permits its discharge in controlled amounts, up to 30%, in the normal urban effluent steam.

Typical comparative pollution data are as follows:

12

| Values in mg/litre | Accelerated Pulping Black Liquor | Waste Paper Mill Effluent | Sulphite Mill Black Liquor |
|---|---|---|---|
| | (From Spruce) | | |
| 5 day biological oxygen demand | 1500 | 8010 | High |
| Chemical oxygen demand | 5685 | 16700 | 230,000 |
| Permanganate number | 11215 | – | 400,000 |

The $BOD_5$ value when related to recently recorded (North America) $BOD_5$ discharges per ton of pulp produced shows the following values: sulphite mill 109 kg; integrated sulphate pulp and paper mills 15 kg; waste paper mill 10 kg; and the accelerated pulping process: 30 kg. The low figure of the sulphate mill is reached only by burning all the black liquor solids produced to recover the major portion of the chemicals used in the process and the strict control of pollutants.

Although the black liquor could be discharged in a controlled manner into normal drainage facilities, it can be utilized uniquely and economically in a variety of ways as a binder, water repellent or size, extender for fortified rosin size, stiffening agent in paper board, fertilizer, hygroscopic additive to soil, extender for resins such as phenolics, and retention agent in papermaking. The solids in the black liquor are referred to as ligneous component. Although there are other chemical components than lignin and lignin nitrate, respectively, such as gums, waxes, etc. the lignin is the major component. Moreover, when precipitating the lignin, some of the said further components precipitate with the lignin. This is to be recognized when speaking of ligneous component.

The useful ligneous component can be precipitated from its mother black liquor by acidifying, preferably to a pH of 5.5 with any acid, but of particular usefulness are ordinary papermaker's alum (aluminum sulphate), recycled nitric acid from the process, and phosphoric acid.

For normal papermaking the black liquor precipitant (ligneous component) resulting from adicification, e.g., with nitric acid or alum, can be added to the cellulosic pulp slurry, foamed (either in precipitated form or in form of the extraction liquor itself) and added at the wet presses or size press, or can be added in its neutral pH form (black liquor) and acidified or not at the size press or wet presses. Unlike kraft liquor the black liquor under any normal treatment either in solution or precipitated exhibits the minimum and non-troublesome amount of foaming. The foaming of the black liquor, either itself or in concentrated form (precipitated ligneous component) can be done by using a commercial surfactant or non-surfactant foaming chemical to foam water with air and then add as required the black liquor. This kind of application is known to the expert per se. However, not with the ligneous component.

Addition of the precipitated black liquor (ligneous component) to the pulp slurry immediately lowers the stock freeness, i.e. drainage rate as it holds or retains the fine suspended particles usually lost through drainage on the paper machine wire.

Addition of the black liquor to paper fibres in normal amounts up to 15% based on the solids and calculated on the dry weight of the fibre will increase the strength properties, i.e. burst strength and stiffness, in an approximate ratio of improvement of 1:1 to 2:1 for equal weight of cellulose fibre depending on the degree of openness of the fiber web making up the paper. When combined with the starch solution and added at high temperature (65°C or above) at the size press, a satisfactory sizing of the board (COBB 50) will be obtained, and the effectiveness of the starch on improving paper quality is greatly improved permitting reduced starch usage. A percentage of 0.4 to 0.6% of black liquor solids on the dry fibre content is sufficient.

Addition in its neutral form (up to 60% solids) to a solution of 20% neutralized urea and 20% fortified rosin size will obtain sizing properties essentially equal to that of the rosin size when used alone. This combination can be precipitated on fibre suspensions in the conventional manner with alum. The neutral form of the black liquor precipitate is hygroscopic when dried and can be used when combined with fast draining materials such as sandy soils to retain moisture and chemicals. When the fibre cooking process and subsequent precipitation is formulated with all or part of those three chemicals essential to plant life, nitrogen (nitric acid), potassium (potassium hydroxide) phosphorus (phosphoric acid), the black liquor becomes a complete fertilizer in itself in addition to its retention properties. This can be readily achieved by using potassium hydroxide in the alkaline extraction step and by precipitating the ligneous component out of the extraction liquor by using phosphoric acid. Official government tests show normal germination and growth rates for barley and oats when this liquor is added to an inert clay. For easy handling, it can be combined with diatomaceous earth to inhibit hygroscopic properties.

The acidified form of the black liquor, i.e. precipitant, can add its binding properties to such resins as melamine or phenolics permitting extension of these relatively expensive products. The neutral black liquor can be used in the preparation of resins since its nitrated form is compatible chemically with that of many other resins. The acidified black liquor precipitant may be resolubilized by changing the pH to 7.5 with alkali and then again precipitated with acid at pH 5.5 making possible the concentration of the ligneous component through precipitation and then resolubilizing for further use in a neutral form.

During the alkaline extraction step most of the lignin nitrate dissolves in the alkaline solution, leaving the fibrous structure softened and partially defiberized. At this point the concentrated black liquor should be drained off for recycling or purging from the system as required. Since little mechanical and/or explosive force has been exerted the point of fibre liberation will not have been reached under normal pulping conditions. Some of the ligneous component remains partially around the fibres, holding them together, but defibering can be readily accomplished by appropriate mechanical means, for example, by subjecting the softened structure to the action of a double disc defibrator or a deflaking unit, machines which will physically break apart the soft fibre bundles without causing substantial injury to the fibres themselves.

It is preferable after mechanical defibering except for animal feed and semi-chemical type pulps to wash the fibres with water to remove surface alkali and black liquor. Washing is preferably accomplished with a minimal amount of hot water, e.g. at a temperature of 85 to 100°C. The washing can be performed in any suitable manner. Following mechanical defibering and washing the cellulosic pulp can be subjected to a second nitration-extraction sequence, as discussed above, or it can be used in any of the conventional ways to make cellulosic fibre webs.

For pulps other than those intended for semi-chemical board or animal feed it will be necessary to screen the pulp, to remove any fibre bundles that withstood the pulping process, which bundles can then be returned to the nitration step or further defibering action.

Most commonly, the screened pulp will be supplied to the headbox of a paper machine, alone or in admixture with other types of fibres and there used to make paper products.

As previously stated, previous art using nitric acid, a highly aggressive agent, has employed high usage and concentrations and lengthy time of treatment particularly for wood. The use of alum as an accelerator permits low consumption, low concentration and minimum processing time for woody fibrous structures in particular and grassy fibrous structures.

The process of delignification serves to dissociate the fibres making up the natural fibre structure freeing the lignin and providing fibres which can be formed into a web for production of paper or board. On a modified or reduced scale of delignification in a relatively dry state (50% moisture) the lignin can be released in situ to act as a binder for the production of building board in which the fibrous structure remains essentially intact. Delignification will also increase the digestibility of fibrous structures by herbivores, cows and sheep etc. Animal feed is being produced commercially today from straw by addition of circa 5% NaOH to the dry weight of straw in a process which makes cubes or pellets with additional food additives. Additionally, work has been done with $NH_4OH$, liquor or gaseous $NH_3$, but this has not proven practical. Utilization of eed produced with NaOH is limited because the improvement in digestibility (food value) is low and the alkali content is high. An improvement to some 300% would be required to meet the food value of corn silage. Levels of improvement presently obtained processing straw are less than one tenth of this, and maximum utilization in the animals diet has not exceeded 15%.

This invention provides a controlled methodof delignification which increases digestibility to the point that the processed straw can comprise a minimum of 50% of the animals total diet. Mixed during processing with other food supplements, molasses, dried milk, etc. a complete food can be formulated. Of equal importance is the potential of this process to be economic in small installations which further makes possible a joint production facility producing alternatively as required, animal feed and paper making fibre, providing flexibility to meet market demands local and long distance.

It is characteristic of agricultural residues that they are bulky making it impossible to meet minimum weight requirements of shipping carriers resulting in high freight costs. Processing under this invention makes viable the production of a compact finished or semi-finished product of high density which greatly reduces freight and handling cost.

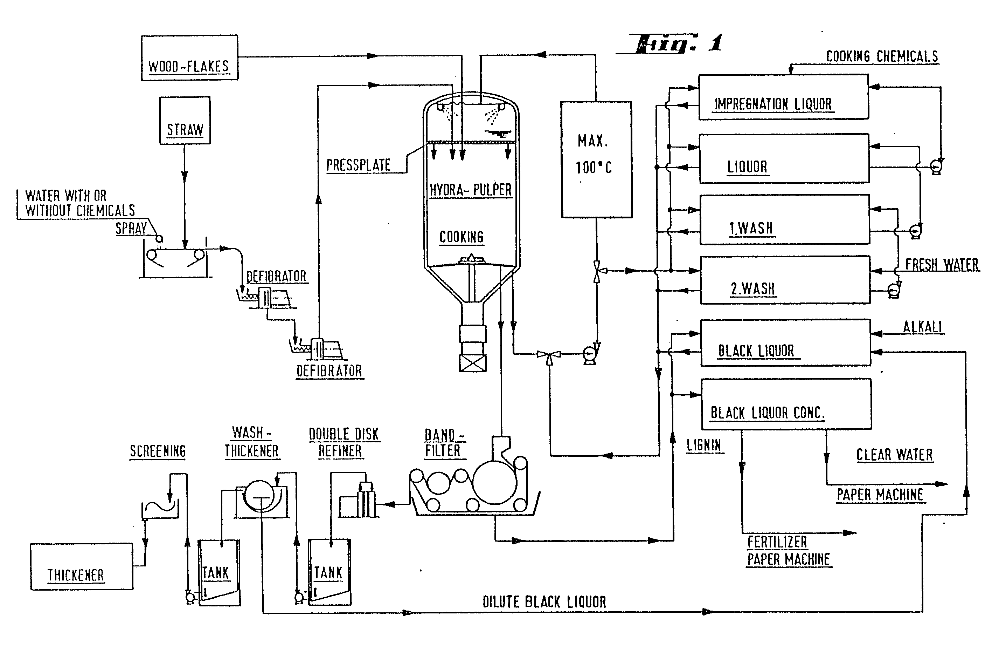

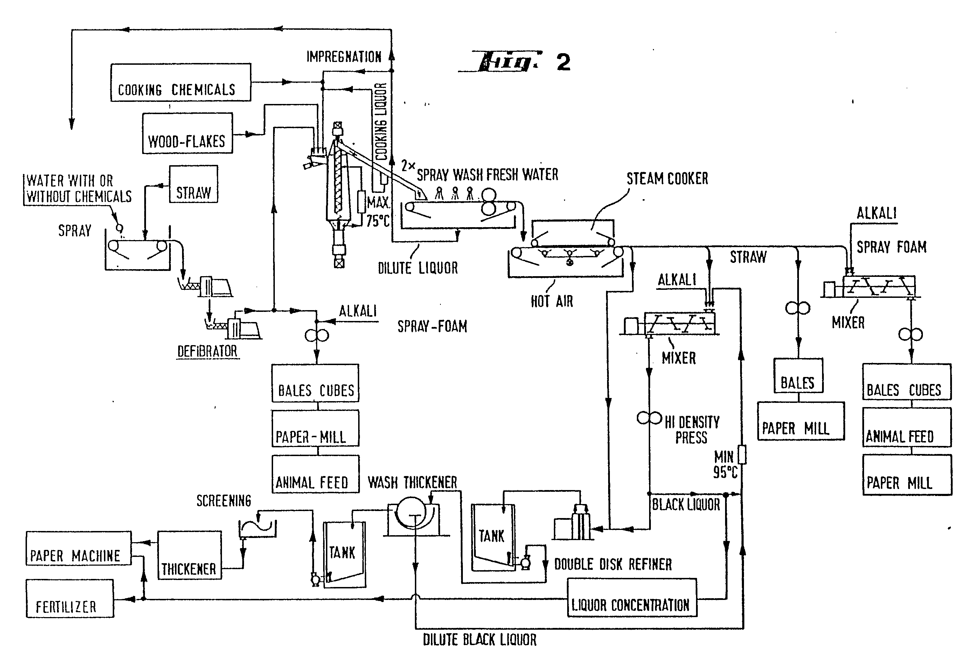

For practicing the inventive process a variety of inexpensive mechanical installations widely varied from present conventional pulping systems becomes not only possible but preferable. Schematic diagrams of two such possibilities are shown in figures 1 and 2. Figure 1, an ultra simple process involving a modified hydrapulper for the production of pulp for paper which would provide an economic and viable unit for production levels as low as 10 tons (10,000 kg) per day. Figure 2 shows a completely flexible unit for the production of animal feed and for paper pulp utilizing hot air (which would be derived from burning agricultural residues) to achieve rapidly sufficient nitration temperatures (100°C) and the drying of the end product to a specific moisture level, as necessary.

The ability to spray or foam the nitrating liquid on dry agricultural residues makes possible a process that is essentially dry and permits the leaching out of the nitrated lignin after the alkaline liquor is added by spray or foam (an action that can follow immediately after the acid nitrating stage), when the moist mass (35—50% moisture) is subjected to heat and pressure. Enough lignin is released to provide a hardened binding material base sufficient to bind the shredded straw when subjected to an appropriate hardening agent such as alum and the usual pressures and temperatures used in the

14

manufacture of flake board from wood residues. In this way an inexpensive building board, water resistant and stiff can be made from straw by generating its own binding materials eliminating the use of expensive resins such as phenolics.

The following examples are given as illustrations of the present invention 1.

## Example 1

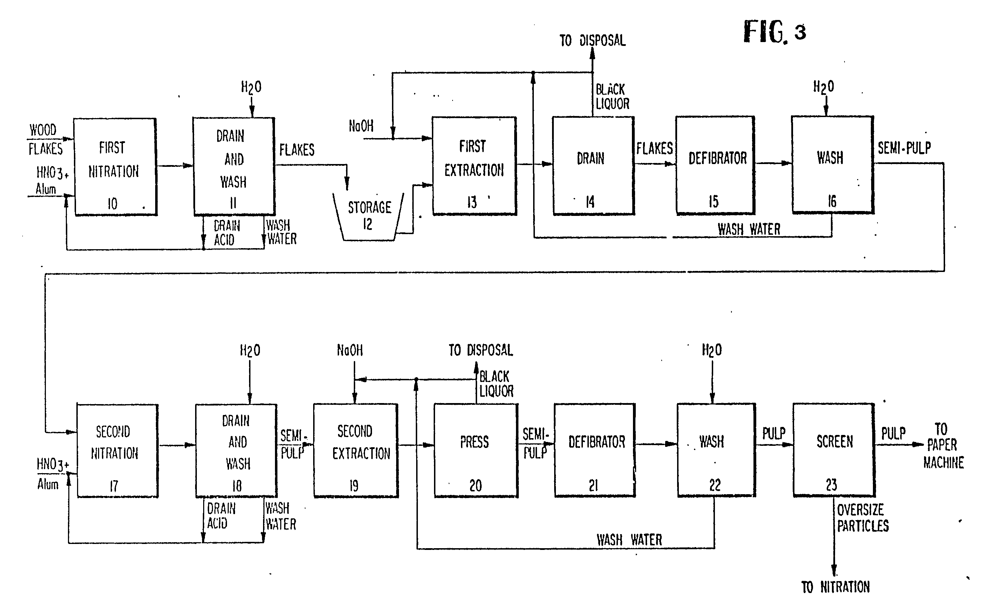

Southern pine wood flakes, cut tangentially to the log circumference to a thickness of about 0.6 mm, are continuously fed into a screw conveyor 10, as shown in Figure 3 attached hereto. The wood has a lignin content of about 35 wt.%. The flakes are submerged and cooked in about six times their weight of a solution of 5 wt.% nitric acid to which has been added aluminum sulphate in the ratio of 1 part aluminum sulphate to 10 parts $HNO_3$ for a period of about 15 minutes at a temperature of about 95°C. The slurry of flakes in acid is then fed into a spin 11 where the flakes are drained of the acid and then washed with a minimal amount of hot water. The drained excess acid and wash water are combined, fortified with alum and concentrated nitric acid as needed, and recycled for use in the initial nitration step. The flakes are then conducted to a storage vessel 12, from which they are fed into a screw conveyor 13 containing about six times their weight of a solution of about 1.5 wt.% sodium hydroxide at a temperature of about 95°C. There they are cooked for about 15 minutes. The flakes, partially defibered, are drained of the alkaline solution (in which the ligning-nitrate has dissolved) for its recycling or purging by a spin dryer 14; then are put through a defibrator 15 in order to separate the fibres partially, following which they are washed in a rotary washer 16 with a minimal amount of hot water. The dilute black liquor that is drained off in the spin dryer 14 is recycled to the first extraction step.

In order to obtain a product with a higher degree of cellulose purlity, i.e., bleachable pulp, not necessary for linerboard grade pulp, the nitration and digestion steps can be repeated. To do so, the semi-pulped flakes are fed into a screw conveyor 17 which contains about six times their weight of a solution of about 1.5 wt.% nitric acid to which aluminum sulphate has been added in the ratio of about 1 part to 10 parts $HNO_3$. There the semi-pulped flakes are cooked for a period of about 15 minutes at a temperature of about 95°C. The semi-pulp is then drained of excess acid and washed with a minimal amount of hot water in a spin dryer 18. The drain acid and wash water are combined and recycled to the second nitration step. The semi-pulp is then fed into a screw conveyor 19 which contains about six times its weight of a solution of about 0.8 wt.% sodium hydroxide. The semi-pulp is there cooked for about 10 minutes at a temperature of about 95°C. The semi-pulp is then drained of the excess alkaline solution (black liquor) in a high density press 20, after which it is fed into a defibrator 21 for additional defibering and finally washed in a rotary washer 22 with a minimal amount of hot water. The black liquor removed from the press 20 is partially recycled to the screw conveyor 19 for reuse, with the remaining portion being sent to waste disposal. The alkaline wash water from rotary washer 22 is also recycled to the second extraction step.

The pulp leaving the rotary washer 22 has been almost completely delignified and defiberized. It is screened by conventional screening equipment 23 to remove oversized particles which have not been defiberized, which are returned to the nitration step for reprocessing.

## Examples 2—7

The process of Example 1 is repeated, using different ligno-cellulosic raw materials, as indicated in the following Table III.

In each example the nitric acid contains 1 part aluminum sulphate for each 10 parts of $HNO_3$. The same applies for examples 8 through 14.

In examples 4 through 7 the ligno-cellulosic material is subjected to only one nitration-extraction sequence.

## Example 8

This example simulates the use of a sulphite digester producing bleachable pulp (Kappa No. 8) using pressure under conditions as follows:

| | |
|---|---|
| Wood | Spruce |
| Form | Flakes 0.5—0.6 mm thick |
| Charge | 1.3 kg (dry) |
| Digester | Stationary circulating |
| Impregnation time | 15 minutes |
| Impregnation temperature | 70°C |

15

| Impregnation chemical concentration | 5% $HNO_3$ |
|---|---|
| Cooking time | 15 minutes |
| Time to cooking temperature | 2 minutes |
| Cooking temperature | 85—95°C |
| Cooking chemical | 7.5% $HNO_3$ |
| Ratio liquor to dry wood | 4:1 |
| Pressure | 7—22 p.s.i.g. (48—152 kPa gauge) |
| Gas off | None |
| Delignification stage | 20 minutes |
| Delignification temperature | 95—100°C |
| Delignification chemical | 0.25% NaOH |
| Delignification pH | 10.0—8.0 |

Test results on the paper produced were as follows:

16

TABLE III

| Example | Ligno-Cellulosic Fibrous Material | First Sequence | | | | | Second Sequence | | | | Approximate Total Chemical Usage, Wt. % of Fibre Used | |
|---|---|---|---|---|---|---|---|---|---|---|---|---|
| | | Nitric Acid | | Sodium Hydroxide | | | Nitric Acid | | Sodium Hydroxide | | | |
| | | Lignin in Fibrous Material, Wt. % | $HNO_3$ Strength Wt. % | Wt. Ratio, Acid to Fibrous Material | NaOH Strength, Wt. % | Wt. Ratio, Base to Fibrous Material | $HNO_3$ Strength, Wt. % | Wt. Ratio, Acid to Fibrous Material | NaOH Strength, Wt. % | Wt. Ratio, Base to Fibrous Material | Nitric Acid | Alkali |
| 2 | Spruce (Norway) (0.5 mm flakes) | 33 | 4.4 | 4:1 | 0.3 | 5:1 | 1.5 | 8:1 | 0.1 | 20:1 | 5.0 | 2.0 |
| 3 | Beech (0.8 mm flakes) | 23 | 3.2 | 4:1 | 0.3 | 5:1 | 1.1 | 8:1 | 0.1 | 20:1 | 4.5 | 2.0 |
| 4 | Bagasse (screened) | 19 | 1.5 | 7:1 | 0.2 | 20:1 | — | — | — | — | 4.0 | 1.8 |
| 5 | Straw (shredded) | 16 | 1.5 | 10:1 | 0.1 | 20:1 | — | — | — | — | 4.0 | 1.8 |
| 6 | Newsprint waste (pulped) | 25 | 1.0 | 15:1 | 0.2 | 20:1 | — | — | — | — | 8.0 | 3.0 |
| 7 | Bamboo (flaked) | 24 | 3.0 | 5:1 | 0.2 | 20:1 | — | — | — | — | 4.0 | 1.8 |

| REFINING—MINUTES | 0 | 5 | 7 | 10 | 13 |
|---|---|---|---|---|---|
| TEST | | | | | |
| FREENESS, °SR | 21 | 27 | 39 | 46 | 52 |
| BASIS WEIGHT, GR /M² | 81.7 | 80.9 | 78.5 | 80.0 | 80.9 |
| CALIPER, MM | 0.115 | 0.100 | 0.094 | 0.089 | 0.089 |
| APPARENT DENSITY, KG /MM³ | 0.710 | 0.809 | 0.835 | 0.899 | 0.909 |
| ELONGATION, % | 1.9 | 2.9 | 2.8 | 2.7 | 3.2 |
| TENSILE STRENGTH, MTR | 6660 | 7400 | 7360 | 7480 | 8240 |
| MULLEN ABS, KPG | 258 | 360 | 324 | 312 | 380 |
| MULLEN INDEX, KPA | 316 | 444 | 412 | 390 | 470 |
| TEAR—BRECHT IMSET, MN | 1118 | 1187 | 942 | 922 | 1109 |

### Example 9

A non-pressure process using low concentration circulated chemical and longer times producing linerboard pulp, Kappa No. 37 used the following conditions:—

| | |
|---|---|
| Wood | Spruce flakes, 0.5—0.6 mm |
| Charge | 1.3 kg., dry |
| Impregnation time | 30 minutes |
| Impregnation temperature | 50°C |
| Impregnation chemical | 0.5% $HNO_3$ solution |
| Cooking time | 45 minutes |
| Cooking temperature | 95°C |
| Cooking chemical | 1.8% $HNO_3$ solution |
| Delignification | NaOH, pH 12, 95°C |

### Example 10

A non-pressure process using a hydrapulper producing a bleachable straw pulp Kappa No. 16.

| | |
|---|---|
| Wheat straw | Mechanically shredded |
| Charge | 1.2 kg., dry |
| Impregnation time | 15 minutes |
| Impregnation temperature | 50°C |
| Impregnation chemical | 0.5% $HNO_3$ solution |
| Cooking time | 15 minutes |
| Cooking temperature | 95°C |
| Cooking chemical | 1.5% $HNO_3$ solution |
| Delignification | NaOH, pH 12, 95°C |

18

# 0 022 881

## Example 11
A non-pressure process using a hydrapulper producing an animal feed grade of straw:—

| | |
|---|---|
| Wheat straw | Mechanically shredded |
| Charge | 1.2 kg., dry |
| Impregnation time | 15 minutes |
| Impregnation temperature | 50°C |
| Impregnation chemical | 0.05% $HNO_3$ solution |
| Cooking time | 15 minutes |
| Cooking temperature | 95°C |
| Cooking chemical | 0.15% $HNO_3$ solution |
| Delignification | NaOH, pH 12, 95°C |

## Example 12
A spray storage system for straw to produce pulp for packaging papers:

| | |
|---|---|
| Wheat straw | Mechanically shredded |
| Starting moisture | 12% (before spraying) |
| Finishing moisture | 35% |
| Chemical sprayed | 3% $HNO_3$ (100%) of dry fibre weight |
| Heat applied | None |
| Storage period | Six months |
| Delignification | NaOH, pH 12 |
| Delignification time | 10 minutes |
| Delignification temperature | 50°C |

## Example 13
A non-pressure process using an open hydrapulper producing a semi-chemical type pulp for use as corrugating medium combined with waste fibre and straw black liquor (lignin) solids.

| | |
|---|---|
| Wheat straw | Mechanically shredded |
| Charge | 1.2 kg Atro |
| Impregnation Time | 15 minutes |
| Impregnation chemical | 0.05% $HNO_3$ conc. |
| Impregnation temperature | 50°C |
| Cooking time | 30 minutes |
| Cooking chemical | 0.15% $HNO_3$ conc. |
| Cooking temperature | 95°C |
| Delignification | 15 minutes, NaOH to pH 12—95°C |

19

Board Composition

|  | % |
|---|---|
| Defibered unscreened pulp | 42 |
| Mixed waste fiber | 33 |
| Unmodified lignin solids | 25 |

Test Results — Produced on Paper Machine

| | |
|---|---|
| Basis weight, gr/m² | 105 |
| Mullen index, kPa | 233 |
| Elmendorf tear, MD/CD—MN | 677/716 |
| Concora, kg p | 158 |

Example 14

A non-pressure process using an open hydrapulper producing a bleachable straw pulp.

| | |
|---|---|
| Wheat straw | Mechanically shredded |
| Charge | 1.2 kg Atro |
| Impregnation time | 15 minutes |
| Impregnation chemical | 0.5% HNO₃ conc. |
| Impregnation temperature | 50°C |
| Cooking time | 15 minutes |
| Cooking chemical | 1.5% HNO₃ conc. |
| Cooking temperature | 95°C |
| Delignification | 15 minutes, NaOH to pH 12—95°C |

Test Results — Produced on Paper Machine

| | |
|---|---|
| Basis weight, gr/m² | 180 |
| Mullen Index, KPA | 495 |
| Elmendorf tear, MD/CD—MN | 739/848 |
| Schopper Riegler, degrees | 50 |
| Kappa, No. | 16 |

**Claims for the Contracting States: AT BE SE**

1. A process for pulping ligno-cellulosic material wherein said material is treated with aqueous nitric acid characterized by using an aqueous nitric acid solution having an HNO₃ concentration of 0.15 to 9.0 wt. % and containing an aluminum compound in an amount of at least 0.01 parts by weight of aluminum ions per each 10 parts by weight of HNO₃.

2. The process of claim 1 characterized by using an HNO₃ concentration of 0.15 to 5.5 wt.%.

3. The process of claim 1 or 2 characterized in that the treatment with the aqueous nitric acid is carried out at a temperature from 85 to 100°C.

4. The process of claim 3 characterized by utilizing a temperature from 85 to 95°C.

5. The process of any of the preceding claims characterized in that the nitrated ligno-cellulosic

20

# O 022 881

Description for the Contracting States: DE GB FR IT NL

This invention relates to an improved process of making fibre in a form ranging from a moderately digested product fit for an animal feed to pulps that can be utilized as conventional semi-chemical, chemical types for packaging papers or fully delignified pulps for bleaching from fibrous, ligno-cellulosic raw material. More particularly, it relates to a nitration pulping process using nitric acid in which the time required for nitration and the second step extraction of the nitrated ligneous components in the fibrous raw material is substantially shortened due to the inclusion in the nitric acid of a small amount of an aluminum compound, and by use of the inherent flexibility of the process time, temperature and chemical concentration, the utilization of controlled delignification to produce animal feed, building board, packaging boards and paper.

So far as I am aware, nitric acid pulping processes, of which many have been proposed, have never been commercially successful for various reasons, chief among which is the relatively long chemical treatment time that they required far exceeding the present day conventional methods. Shortened times were possible if strong nitric acid was used, or if pressurized vessels and high temperatures were employed, but those conditions create other problems such as excessive and explosive emission of toxic nitrogen oxide fumes and damage to the cellulosic fibre structure. Moreover, recovery of the acid has not been possible, and the use of relatively concentrated nitric acid, e.g. 15 to 42% by wt. $HNO_3$, becomes therefore prohibitively expensive. In short, the nitric acid pulping processes heretofore proposed have offered no advantages and many disadvantages over present day conventional systems. As recently as 1960 a published comprehensive review of nitric acid pulping by Crown Zellerback Corporation stated that while nitric acid was specific for the reaction with lignin, the use of acid reagent was excessive and uneconomic, and pollution problems remained unsolved.

EP—A—0 012 775 claims a process for pulping ligno-cellulosic material wherein said material is treated with aqueous nitric acid having an $HNO_3$ concentration of 0.15 to 9.0 weight percent in the presence of aluminum sulphate in an amount of 0.8 to 1.3 parts per each 10 parts by weight of $HNO_3$. The aluminum sulphate causes acceleration of the nitration reaction.

It has now been found that instead of aluminum sulphate other aluminum compounds can be used in the pulping process described in EPA 0 012 775.

Accordingly, the invention relates to a process for pulping ligno-cellulosic material wherein said material is treated with aqueous nitric acid which process if characterized by using an aqueous nitric acid solution having an $HNO_3$ concentration of 0.15 to 9.0 wt.% and containing an aluminum compound other than aluminum sulphate in an amount of at least 0.01 parts by weight of aluminum ions per each 10 parts by weight of $HNO_3$.

Examples for such aluminum compounds are aluminum chloride, aluminum oxides, such as $Al_2O_3$. 1/2 $H_2O$, aluminum phosphates, aluminum nitrate, etc. These salts should be soluble in the aqueous nitric acid used in the pulping process.

With aluminum chloride it is preferred to use a hydrated product or a hydrated product with additional water to avoid violet reactions when adding it to the pulping liquor. To avoid excessive hydrolysis of the aluminum chloride to aluminum hydroxide or oxide hydrate which must be redissolved later, nitric acid can be added. When using aluminum nitrate as starting material the introduction of foreign ions is avoided.

The stated aluminum compounds should be used in amounts leading to similar aluminum ion concentrations in the pulping liquor as compared to the use of aluminum sulphate (paper makers alum) in the process of EP—A—0 012 775 which alum is used in an amount of 0.8 to 1.3 parts by weight per each 10 parts by weight of $HNO_3$ (100%). Comparing the molecular weights of the alum $(Al_2(SO_4)_3 \cdot 18H_2O = 666)$ with, for example, $Al_2O_3 \cdot 1/2$ ($H_2O$ (111), it follows that for achieving the same aluminum ion concentration in the pulping liquor the aluminum oxide should be used in an amount of 1/6 compared to the alum. In terms of aluminum ion concentration (or aluminum concentration) this means that it should be from 0.065 to 0.105 parts by weight of aluminum ions per each 10 parts of $HNO_3$ (100%).

While it has been noted that there is a minimum amount of aluminum ions to achieve a remarkable effect, e.g. 0.01, 0.02, 0.03 or 0.04 parts by weight of aluminum ions per each 10 parts of $HNO_3$, there is actually no strict upper limit, and the aluminum ion concentration could well go above 0.105, for example up to 0.15, 0.2, or even more.

It has been found, however, that with exceeding a certain aluminum level no further advantage as to time reduction is obtained so that higher amounts are not desirable under economic and environmental pollution point of views. The preferred range is 0.065 to 0.105 parts by weight of aluminum ions per each 10 parts by weight of $HNO_3$, a value of about 0.08 giving desirable results in the practice of the process of the invention.

Besides reduction in process time, a further point of view is the inherent strength characteristics of the fiber obtained according to the process of the invention which characteristics can be influenced by the amount of aluminum. Thus, for every kind of ligno-cellulosic material, e.g. bagasse or bamboo, the optimum amount of aluminum can vary depending on what reduction in process time and what fiber characteristics are demanded.

23

## 0 022 881

The process of this invention uses only 0.15—9.0% nitric acid in relation to fibre yield which, together with the alkali used for delignification, is no more than with conventional methods of pulping without chemical recovering systems while eliminating the complex requirements of recovery and/or manufacture of the cooking liquors. Furthermore the nitrating solution can, except for that absorbed in the fibre structure, be recovered virtually intact and recycled. More importantly, unlike previous attempts with nitric acid, this new process does not dissolve the lignin content of fibrous structures in the acid stage.

Conventional pulp mills require high investment due to the high temperatures and pressure involved, and if water and air pollution is controlled and chemical recovery is practiced costs are substantially higher. The process of this invention uses simple chemicals available in crystalline or dissolved form, does not require superatmospheric pressure, or temperatures over 100°C, offers minimal problems of air and water pollution, and offers economic usability of the products normally wasted by burning or dumping.

While the precise time required for the nitration-extraction operation is dependent upon the variables of particle thickness, temperature and reagent concentration, it can be said for the process of the present invention that it generally enables one to perform the nitration-extraction operation somewhere in the range from 20 minutes minimum for high yield wood chemical pulps for packaging papers and boards, to a maximum time of 50 minutes for easily bleached pulps without using pressure and with temperatures not exceeding 100°C. Those times are to be compared to the conventional sulphite process times of 6.25 hours and 7.50 hours and the sulphate process times of 2.5 and 5.0 hours, respectively, at high pressures and temperatures, as set forth in the following table I:

TABLE I

Pulping Processes Compared

| | Liquor Concentration, Wt. % | Total Cooking Time | Temperature, °C | Pressure, P.S.I.G. (kPa, gauge) | Fibre Species | Total Yield % |
|---|---|---|---|---|---|---|
| 1. Casey, "Pulp and Paper" Vol. 1, p. 169 | | | | | | |
| Sulphite-Bleach Grade | | | | | | |
| Calcium Base | 6.0 | 6.25 hrs. | 140 | 80 (552) | Western Conifer | 45.4 |
| Ammonia Base | 6.0 | 7.50 hrs. | 146 | 80 (552) | Western Conifer | 45.0 |
| 2. Casey, pp. 230—264 | | | | | | |
| Sulphate — High Yield | 18.5 | 2.50 hrs. (1) | 170 | 140 (965) | U.S. So. Pine | 60.0 |
| Sulphate — Bleachable | 22.0 | 5.00 hrs. (1) | 160 | 100 (690) | U.S. So. Pine | 43.0 |
| (1) includes time to bring to temperature | | | | | | |
| 3. TAPPI CA Report, 52 pp. 17—19 | | | | | | |
| Bagasse — Soda Process | 6.5 | 26.50 min. (2) | 170 | 114 (787) | Bagasse | 56.0 |
| (2) includes cooking time in blow tank | | | | | | |
| 4. TAPPI CA Report 52, pp. 26—27 | | | | | | |
| Bamboo — Kraft Process | 17—19 | 1.25 hrs. | 150 | 85 (586) | Bamboo | 56.0 |
| 5. Accelerated Pulping Examples (Invention) | HNO₃ / NaOH | | | | | |
| High Yield Grade | 5.5 / 0.3 | 30 min. | 85—100 | None | U.S. So. Pine | 56.0 |
| Bleachable Grade | | | | | | |
| (1st sequence) | 3.0 / 0.3 | 30 min. | 85—100 | None | Norway Spruce | 45.0 |
| (2nd sequence) | 1.5 / 0.1 | 20 min. | 85—100 | None | | |
| Bagasse | 0.8 / 0.2 | 30 min. | 85—100 | None | Bagasse | 52.0 |
| Bamboo | 3.0 / 0.2 | 30 min. | 85—100 | None | Bamboo | 44.0 |

## O 022 881

Although the invention is described below mainly referring to the embodiment involving an alkaline extraction of nitrated lignin after the nitration step, it is recognized that, though preferable, an alkaline extraction is not absolutely necessary for the production of paper pulps. However, the addition of alkali is necessary for the production of animal feeds and would be normally used in the production of semi-chemical pulp where maximum defiberization for minimum chemical treatment is desired.

The ability of the present process to be conducted under atmospheric pressure eliminates the need of explosive release of pressure that is used in conventional chemical pulp systems to defibre the fibrous structures within chips or chopped materials. The basic preservation of the fibrous structure permits easy recycling of the fibrous structure through an additional gentle cooking cycle, if required, and easy drainage of cooking liquor and washing out of the residual black liquor leaving the fibrous structure substantially intact. Defiberization is then accomplished mechanically with gentleness and rapidity, with minimum loss of fibre length and degradation of basic fibre structure. Additionally, the defiberization can be closely controlled to preserve long thin fibre bundles from fibrous structures made up of very short (under 0.5 mm) fibres such as straw thus improving strength and drainage characteristics.

All forms of ligno-cellulosic materials can be subjected to the pulping process of the present invention. That includes, without limitation, woody materials such as U.S. Southern pine, spruce, beech and bamboo, as well as grassy materials which find minor usage such as straws, bagasse and kenaf. In addition to these normally used sources of paper making fibre, other, now wasted, fibrous plants as rape seed straw and rice husks which resist conventional pulping methods can easily be reduced to potentially useful fibre by this process. High yield shrub growth such as coppice willow found extensively in Ireland and presently unused produces, including its bark, an acceptable, clean and economic paper making fibre. Besides such virgin materials, the process of the present invention can be used to delignify and further defibre paper wastes, such as waste corrugated boxes containing semi-chemical board. Finally, it becomes practical to economically pulp small accumulations of wood slab waste and sawdust which are most often burned.

The raw material should be in particulate form before being submitted to the nitration step. Virgin plant material, for example, should be chopped, crushed, chipped or flaked. Paper wastes should be mechanically pulped in water to the defibered state, for example to obtain a slurry containing about 7 to 9 wt. % cellulose. When it is wood that is to be pulped, the required nitration extraction time will be shorter and the pulp more uniform if the wood particles are thinner. It has been found especially advantageous to use wood flakes, i.e. particles about 0.3 to 0.8 mm thick obtained by cutting the log tangentially to the circumference. Flaking is the cutting process used in manufacturing particle board. At the present time the paper manufacturing industry uses wood chips almost exclusively, the thickness of which is usually in the range of about 6 to 10 mm. Horsepower consumption for the flaking of logs is roughly equivalent to that for chipping, as are production levels and flexibility in handling short or long or different diameter logs. The use of flakes does require higher cubic handling and cooking capacities than does chips, but flaking is nonetheless economically acceptable in the pulping process of this invention because high pressure pressurized cooking vessels with restricted volumes are not required.

Use of wood flakes, rather than the thicker chips, speeds nitric acid impregnation and also shortens the time required for outward diffusion of dissolved lignin in the subsequent alkaline extraction step. Additionally, flaking is accomplished by cutting around the circumference of the log, much as veneers are made, whereas chipping is performed by cutting at the end of the log, the fibre length is essentially preserved in flakes and the fibre ends are not crushed. Chipping, on the other hand, fractures the fibres and crushes their ends. The more intact fibre structures and greater exposed surface of the flakes are more easily penetrated by the chemicals used in the nitration and extraction steps of the present process. The fibres produced from flakes are marginally shorter than those of conventional chips.

Where a pulp is required for rough papers, i.e. brown or packaging papers and boards, conventional chips can be used after subjecting them to conventional crushing which reduces them to rough splinters 1.5—3.0 mm thick, 4.0—8.0 mm side and 25 mm long.

The nitration (cooking) of the ligno-cellulosic raw material is accomplished by submerging or wetting with recycled acid the material in a sufficient amount of aqueous nitric acid at elevated temperature, preferably 85 to 100°C to penetrate the fibrous structure and react with the lignin. In order to permit the use of an open vessel for the nitration step, without the emission of harmful nitrogen oxide vapors, there is used a very dilute nitric acid having an $HNO_3$ concentration of 0.15 to 9.0 weight percent, e.g. 0.15 to 5.5 weight percent or 0.3 to 5.5 weight percent preferably less than 5.5 weight percent and most preferred less than 5 weight percent. It can be preferred to subject the lignocellulosic raw material to an impregnation step before the cooking-nitration step. The impregnation is done with a dilute concentration of the cooking liquor at low temperatures (e.g. 70°C or below, e.g. 50°C or below) and serves three purposes:

a) Utilization of drained concentrated liquor after the cooking process together with the dilute cooking liquor from the washing process,

b) conservation of heat by recycling liquor, and

c) even moisture distribution throughout the fibrous structure before cooking.

26

Whereas the cooking step is not necessarily preceded by an impregnation step, an impregnation step is always followed by a cooking step.

The preferred acid strength in the cooking-nitration step depends upon the nature of the ligno-cellulosic raw material being pulped. For U.S. Southern pine, for example, which is relatively high in lignin content (over 30 wt.%), and contains a high percentage of resins and waxes it is preferred to use an $HNO_3$ concentration of at least 4.5 or 5.5 wt.%. Wheat straw, on the other hand, is low in lignin content (about 15 wt.%) and is preferably cooked and nitrated with nitric acid having an $HNO_3$ concentration of only 0.8 to 1.5 wt.% for production of chemical pulp. These concentrations are based on a normal nitration period of 15 minutes and production of chemical type pulp.

Where imgreganation periods and longer time is used the acid concentration can be drastically reduced. For example, spruce flakes-impregnation 30 minutes at 0.5% concentration plus cooking and nitration, respectively, 45 minutes at 1.75%. Where a pulp of lower purity (i.e. less delignification) is required the said concentration can be reduced, as in animal feed or semi-chemical pulp. As a practical matter it will usually be woody plant material that is twice subjected to the cooking-nitration/lignin-extraction sequence, since grassy plant materials and paper wastes can have their ligneous components nitrated and almost completely extracted in one sequence using relatively stronger, but still dilute, nitric acid, and obtain pulp of adequate cellulose purity and easy bleachability. Even with woody raw materials, a single nitration-extraction sequence is all that is required where the pulp product is to be used to make linerboard and lower brightness papers and not to make high purity cellulose or high brightness paper.

The amount of nitric acid used in the nitration step should be sufficient to completely react by submergence or contact by recirculation the particulate ligno-cellulosic material and adequate on a stoichiometric basis to nitrate all of the lignin content of the raw materials. This will usually mean formation of a mixture of 5 parts of liquid acid to 1.0 of dry woood to 10 parts of liquid acid for 1.0 part of dry grass fibre (straw). Where the acid liquor can be circulated and heated indirectly lower ratios can be used. Additionally the acid can be sprayed or foamed in low concentration on grassy fibres to form an intimate mixture to a composite moisture content of 35 to 50% and then subjected to heat for reaction at once or at later date — six months or more without degradation.

The temperature at which the nitric acid cooking step is performed should be adequate to effect nitration of the lignin, but is preferable not so high as to cause degradation of the cellulosic fibres. Temperatures within the range of 85 to 100°C, in particular 85 to 95°C, are preferred. Since the nitration-extraction portion of the process of the present invention can be performed in such a short period of time, it is possible to conduct both of those steps under atmospheric pressure conditions, although superatmospheric pressures, e.g. from 10 to 35 p.s.i.g. (70—241 Pa gauge) can be used if it is desired to shorten the nitration time slightly but chiefly to provide ease of processing on a continuous basis. The improvement provided by the present invention is independent of whether the process is conducted under atmospheric pressure or at elevated pressures.

The introduction of a non pressure system is designed specifically for use in new and relatively small pulping installations (10—50 tons (10,000—50,000 kg) per day) throughout the world. However, it is recognized that the requirement for larger production units can be met and that in many instances existing pulp mill equipment could be utilized to reduce investment costs in preventing present pollution problems.

All present systems use high pressures and temperatures coupled with long cooking periods for fully defibered or chemical pulps from either wood or grasses. It has been found that by cooking with light pressures (15—35 psig (103—241 kPa gauge)) while holding temperatures at 110°C or below, preferably below 100°C (most preferably 95°C) the nitration period can be shortened to 5—7 minutes for wood flakes, straw, etc. Conventional sized wood chips chips can also be readily pulped although the cooking time period is extended to one hour requiring two nitration steps with a preliminary defibering step between. Alternatively, the chips can be crushed previous to filling the digester and the nitration step limited to one step which additionally avoids the possibility of over and under reacted fibrous structures. These methods of using light pressures with either wood flakes or chips makes practical, for example, the conversion of existing sulphite pulp mills to this process. Other pulping systems such as the "Kamyr" or "Pandia"-system, which are continuous, operating at high pressure, 150—175 psig (1.03—1.21 MPa gauge) are also adaptable for processing wood chips in one stage producing a semi-chemical type after normal mechanical defibering or full chemical pulp. Thus, in a special embodiment of the inventive process the nitration step is operated at a pressure of 100 to 150 psig (0.70—1.03 MPa gauge) when using as starting material crushed wood chips as used in conventional processes today. See Table IIa "Comparative $HNO_3$ Pressure Nitration Cycles. Normal Chemical or Delignified Pulp".

Additionally it has been found that the use of pressure permits full defibering of the fibrous structure in the nitration stage without production of black liquor thus avoiding the lignin alkali extraction phase. This is accomplished by raising the $HNO_3$ liquor concentration by 2.5—3.5% over that required for the nitration-alkali delignification sequence and extending the time of reaction slightly, 3—5 minutes. Thus, without using pressure, i.e. conducting the process under approximately atmospheric pressure conditions, the $HNO_3$ liquor concentration is preferably at most 5.5 weight percent, in particular at most 5 weight percent. When employing pressure, the $HNO_3$ concentration can go up to 9.0 weight percent and preferably it is no more than 7.5 or 7.0 weight percent. Of course, the lower concentrations as stated for the pressurized nitration step can be advantageously used.

TABLE IIa

Comparative $HNO_3$ Pressurized Nitration Cycles, Normal Chemical or Delignified Pulp with Alkali Stage

A. Non Pressure System — Wood Flakes or Equivalent

| | | Pine | Spruce | Beech | Straw |
|---|---|---|---|---|---|
| Cooking Time | Minutes | 15 | 15 | 15 | 15 |
| Temperature | °C | 85 | 85 | 85 | 85 |
| Liquor Concentration | % | 5.5 | 5.0 | 4.0 | 1.0 |

B. Pressure 15 — 35 p.s.i.g. (103 — 241 kPa gauge) — Wood Flakes or Equivalent

| | | Pine | Beech | Straw | Bamboo |
|---|---|---|---|---|---|
| Cooking Time | Minutes | 7 | 7 | 5 | 7 |
| Temperature | °C | 110 | 110 | 110 | 110 |
| Liquor Concentration | % | 5.5 | 3.5 | 0.5 | 2.5 |

C. Pressure 15 — 35 p.s.i.g. (103 — 241 kPa gauge) — Wood Chips

| | | Spruce | Beech |
|---|---|---|---|
| Cooking Time | Minutes | 45 | 45 |
| Temperature | °C | 110 | 110 |
| Liquor Concentration | % | 4.5 | 3.5 |
| Difiberization | | x | x |
| Time — Non Pressure | Minutes | 15 | 15 |
| Temperature | °C | 85 | 85 |
| Liquor Concentration | % | 2.5 | 2.0 |

D. Pressure 100 — 150 p.s.i.g. (0.70 — 1.03 MPa gauge) — Wood Chips

| | | Spruce | Beech | Beech Semi-Chemical |
|---|---|---|---|---|
| Cooking Time | Minutes | 45 | 45 | 10 |
| Temperature | °C | 110 | 110 | 110 |
| Liquor Concentration | % | 4.5 | 3.5 | 3.0 |
| Defiberization | | — | — | x |

0 022 881

The process without delignification produces a fibre for different and limited end use papers than that of the delignified type fiber. It is of very light colour, high yield and can be easily bleached to high brightness levels, but not by normal alkaline bleaching. The reduced handling of the fibrous structure greatly improves its drainage properties and facilitates washing which is a major problem today in bleaching short fibre structures such as straw.

In all these uses of pressure it is not necessary to vent any gases; in fact it is economic that with the gases be contained and retained to create a false pressure and keeping operating temperatures below $100°C$ thus avoiding cellulose degradation. The degree of false pressure created is dependent on acid concentration.

See following Table IIb "Comparative $HNO_3$ Pressure Nitration Cycles . No Delignification Stage". Where additional pressure is needed as in the "Kamyr"-process to facilitate operation it can be obtained with air injections.

The ability to conduct the nitration step at atmospheric pressure means that substantially open vessels can be employed providing substantial savings in equipment cost compared to conventional superatmospheric pulping processes. Although an open vessel can be employed for the nitration step, it is preferred to maintain closure with recycling of vapors to prevent possible troublesome emission of nitrogen oxide vapors. Present environmental laws in the U.S.A. permit a maximum nitrogen oxide emission level of only 185 ppm. The precise temperature at which nitrogen oxide will be released from the slurry in the nitration step will depend upon the concentration of the nitric acid, since the higher the acid concentration, the lower will be the temperature at which nitrogen oxide vapor emissions will occur.

## TABLE IIb

### Comparative HNO$_3$ Pressurized Nitration Cycles, Alkali Delignification Stage Eliminated

A. Pressure 15 – 35 p.s.i.g. (103 – 241 kPa gauge) – Wood Flakes or Equivalent

| | | Chemical Pulp | | | |
| --- | --- | --- | --- | --- | --- |
| | | Pine | Beech | Straw | Bamboo |
| Cooking Time | Minutes | 10 | 10 | 6 | 10 |
| Temperature | °C | 110 | 110 | 110 | 110 |
| Liquor Concentration | % | 9.0 | 5.5 | 2.5 | 5.0 |

B. Pressure 100 – 150 p.s.i.g. (0.70 – 1.03 MPa gauge) – Wood Chips

| | | Chemical Pulp | |
| --- | --- | --- | --- |
| | | Spruce | Beech |
| Cooking Time | Minutes | 45 | 45 |
| Temperature | °C | 110 | 110 |
| Liquor Concentration | % | 8.0 | 5.5 |

C. Pressure 35 – 150 p.s.i.g. (0.24 – 1.03 MPa gauge) – Wood Chips

| | | Semi-Chemical Pulp Mixed Hardwoods |
| --- | --- | --- |
| | | Beech |
| Cooking Time | Minutes | 10 |
| Temperature | °C | 100 |
| Liquor Concentration | % | 4.0 |

0 022 881

By way of further explanation, nitric acid decomposes at about 86°C into water and nitrogen oxide gas, which is potentially lethal and can be explosive. The nitrogen gas is somewhat soluble in water, however: about 130 ml will dissolve in a litre of cold water, about 660 ml will dissolve in a liter of hot water. If nitric acid having an $HNO_3$ comcentration greater than about 3.0 wt.% is heated in the presence of cellulose to above about 65°C then an exothermic reaction with the cellulose will result. For this reason, where an impregnation step becomes preferable to economize on nitric acid consumption through recycling of partly spent or diluted acid it is desirable to maintain low temperatures, e.g. 50°C or below. Temperatures over 85°C will produce nitrogen oxide gas which depending on the acid concentration will be more than the water can hold in solution and will have to be contained. When an open vessel is being used to conduct the nitration step in the process of the present invention, it will usually be preferred to employ a temperature no higher than about 90°C or 95°C. However, as stated herein before, when operating the nitration step under pressure a temperature of up to 110°C, preferably up to 100°C, can be employed.

It is an outstanding advantage of the process of the present invention that it can be performed in non-pressure vessels in short time periods, without causing air pollution problems.

The nitration step, and indeed the entire process of the present invention, can be carried out continuously, semi-continuously, or batchwise, whichever is desired. Selection of equipment will of course depend upon that choice. It is generally more enonomical to conduct the process continuously in which event the nitration step can advantageously be conducted in some type of screw conveyor unit. Batchwise nitrations can be carried out quite well in a hydrapulper making possible the economic operation of very small mills.

The nitric acid impregnation and cooking steps are conducted for a time sufficient to produce the required residual level of the ligneous component of the ligno-cellulosic raw material after extraction of the lignin. If the nitration-extraction sequence is performed twice, each nitration step can be conducted for a shorter period than if it was performed just once. The time required to effect the desired degree of nitration is dependent, of course, on the strength of the nitric acid used, as well as the temperature employed, since higher acid strengths and higher temperatures promote the nitration reaction.

Additional considerations are the type and particle size of the ligno-cellulosic material being processed. In general, with the process of the present invention the total nitration time, whether performed in one step or broken down into two nitration-extraction sequences, can be as short as 5 minutes or extended to 45 minutes. For straw or bagasse which will go into dry stroage before lignification a simple spray or foam application at lower levels of acid concentration at room temperatures is all that is necessary. Following the nitration step the ligno-cellulosic material is separated from the nitric acid solution and preferably washed with water to remove surface acid. The wash water is preferably hot, e.g. at a temperature of 85 to 100°C and is used in minimal amounts. One efficient method of separating and washing the nitrated ligno-cellulosic material is by spindraining the slurry in a rotary dryer, followed by water washing the solids in the same vessel. Another method, if a continuous system is used, is draining followed by reverse flow washing. Alternatively, draining, followed by flooding with wash water and a second draining can be used.

The separated nitric acid is advantageously recycled to the nitration step to be used again, as is the acidic wash water. Both solutions will be relatively clear, but may be slightly coloured due to the presence of small amounts of dissolved material. The recycled nitric acid steam will be fortified with concentrated nitric acid and with fresh aluminum sulphate so as to restore the concentrations of those reagents to the desired levels.

The nitrated fibrous structures remain intact and appear to be essentially the same as when those particles were introduced to the nitric acid submersion step, except for some softening and a slightly darker colour. The nitrated fibrous structures can be held in storage for months without either deteriorating or causing problems in the lignin extraction and defibering steps which follow. This storability feature can be of special advantage in the case where straw, bagasse or similar grassy plants are to be pulped. Grassy plants are usually harvested during relatively short seasons, causing temporary, seasonal surges in supply of that raw material to the pulp mills. Since the demand for the finished pulp is relatively constant, however, it becomes necessary to periodically store large quantities of the excess ligno-cellulosic raw material. This presents a problem because grassy plants are particularly susceptible to bacterial of fungi attack during storage. By the process of the present invention the excess raw material can be nitrated without delay, by spraying or foaming a dilute solution of acid to obtain intimate, overall contact with the fibre to a total moisture content of 30 to 50%, and held in storage in that form without being degraded by bacteria. Extended periods of storage have been experienced up to one year in contact with the acid at a moisture level of 30—50% permitting usage of a very low percentage of acid to dry fibre, i.e. 1—3%.

The nitrated ligno-cellulosic material is next submerged in an alkaline, aqueous extraction solution, e.g. a solution of sodium, potassium, and/or ammonium hydroxide, so as to dissolve most of the nitrated lignin out of the fibrous structure. The lignin nitrate is substantially insoluble in acidic aqueous media, but is readily dissolved in basic aqueous media, for example having a pH of about 12.

The alkaline concentration of the extraction solution must be sufficient that the solution will leach out by dissolving most of the nitrated ligneous material in the fibrous structure. Usually it is preferred to

# O 022 881

use an alkaline strength (NaOH, KOH, or $NH_4OH$) of 0.1 to 0.5 wt.%. If the nitration-extraction sequence is performed twice on the ligno-cellulose material, then the alkaline strength used in the second extraction step need not be as high as that employed for the first extraction. Often the concentration of the alkaline solution used in the second nitration-extraction sequence will be about one-fifth to one-half that which is used in the initial sequence. The alkaline consumption is basically one of bringing the starting pH to about 12, and is therefore somewhat dependent on the concentration of residual acid remaining. The amount of the alkaline extraction solution used should be adequate to completely submerge the ligno-cellulosic material and dissolve most of the nitrated ligneous components. Usually the amount of alkaline extraction solution used will provide a slurry containing 5 to 8 wt.% of the cellulosic fibre.

The temperature at which the alkaline extraction step is conducted should be sufficiently high to effect dissolution of most of the nitrated ligneous material. Preferably a temperature of 75 to 100°C is used. Temperatures as low as 15°C can be used which will extend the time necessary for delignification. These low temperatures are particularly important in producing animal feed or partially defibered pulp from agricultural residues. Where straw as an example for an agricultural residue has been sprayed with nitric acid and held in storage, delignification with alkali under 50°C will produce a fully defibered pulp. The alkaline extraction step is best performed under atmospheric pressure conditions, thereby permitting the use of an open vessel and avoidance of expensive high pressure equipment. If desired, however, for example to further shorten the extraction time or utilize existing pressurized equipment, high temperatures and superatmospheric pressures, e.g. up to 10 or 15 p.s.i.g. (70 or 103 kPa gauge) can be used for the extraction. Increased time and temperatures using alkaline solutions will result normally in some degradation of the cellulose.

As discussed above with regard to the nitration step, the nitration — extraction sequence can be conducted just once, or it can be repeated, in which event each extraction step can be performed for a shorter period of time than if it were performed just once. It will be recognized that the time required to effect the desired degree of extraction is dependent on the particle size and type of the ligno-cellulosic material, and the temperature at which the extraction is conducted. In general, however, the total time required for the lignin-extraction, whether performed in one step or broken down into two extractions, will be no more than about 20 minutes, often being within the range of 5 to 15 minutes.

If an open vessel is used for the extraction step, it can advantageously be a hydrapulper, If a closed vessel is used, a screw conveyor may be preferred. After treatment with the alkaline extraction solution, the fibrous, cellulosic material is separated from the lignin-containing solution, preferably in a high density press. If, however, the fibre bundles are to be subjected to a second nitration-extraction sequence, then it will suffice to just drain off the extraction liquor. After the extraction step, the alkaline solution contains dissolved ligneous components and is reddish brown in colour. It is usually referred to as "black liquor". During start-up of the process all of the separated black liquor, together with the alkaline wash water, can be returned to the extraction vessel for reuse. As the process is continued, however, the content of dissolved solids in the black liquor will grow to a maximum tolerable concentration, e.g., somewhere in the range of 10 to 25 wt.%, depending upon the quality of product desired. At that point an appropriate portion of the black liquor should be regularly removed and replaced with make up clear alkali liquor in order to prevent further increase in the concentration of the dissolved solids. The black liquor purge stream could be disposed of by various means such as by dumping as waste, or by concentrating and burning. Alternatively, the black liquor purge stream can be combined with the completely defibered pulp to supply ligneous binder for fiber web products prepared from the pulp, especially paperboard.

When the alkali lignin extraction process is complete the pH of the black liquor will be almost neutral, e.g. from 7.5 to 8.5 which is far lower than that of conventional alkaline processes the pH of which is usually in the range of 12—14. This factor of almost neutral pH makes the black liquor substantially more amenable to being handled in subsequent chemical processing. Sulphite acid systems produce black liquor in a pH range of 1.0—2.0.

Additionally, the black liquor has a very low range of $BOD_5$ (Biological Oxygen Demand — 5 day) and COD (Chemical Oxygen Demand) which together with its chemical make up permits its discharge in controlled amounts, up to 30%, in the normal urban effluent stream.

Typical comparative pollution data are as follows:

| Values in mg/litre | Accelerated Pulping Black Liquor | Waste Paper Mill Effluent | Sulphite Mill Black Liquor |
|---|---|---|---|
| | (From Spruce) | | |
| 5 day biological oxygen demand | 1500 | 8010 | High |
| Chemical oxygen demand | 5685 | 16700 | 230,000 |
| Permanganate number | 11215 | — | 400,000 |

The $BOD_5$ value when related to recently recorded (North America) $BOD_5$ discharges per ton of pulp produced shows the following values; sulphite mill 109 kg; integrated sulphate pulp and paper mills 15 kg; waste paper mill 10 kg; and the accelerated pulping process: 30 kg. The low figure of the sulphate mill is reached only by burning all the black liquor solids produced to recover the major portion of the chemicals used in the process and the strict control of pollutants.

Although the black liquor could be discharged in a controlled manner into normal drainage facilities, it can be utilized uniquely and economically in a variety of ways as a binder, water repellent or size, extender for fortified rosin size, stiffening agent in paper board, fertilizer, hygroscopic additive to soil, extender for resins such as phenolics, and retention agent in papermaking. The solids in the black liquor are referred to as ligneous component. Although there are other chemical components than lignin and lignin nitrate, respectively, such as gums, waxes, etc. the lignin is the major component. Moreover, when precipitating the lignin, some of the said further components precipitate with the lignin. This is to be recognized when speaking of ligneous component.

The useful ligneous component can be precipitated from its mother black liquor by acidifying, preferably to a pH of 5.5 with any acid, but of particular usefulness are ordinary papermaker's alum (aluminum sulphate), recycled nitric acid from the process, and phosphoric acid.

For normal papermaking the black liquor precipitant (ligeous component) resulting from acidification, e.g., with nitric acid or alum, can be added to the cellulosic pulp slurry, foamed (either in precipitated form or in form of the extraction liquor itself) and added at the wet presses or size press, or can be added in its neutral pH form (black liquor) and acidified or not at the size press or wet presses. Unlike kraft liquor the black liquor under any normal treatment either in solution or precipitated exhibits the minimum and non-troublesome amount of foaming. The foaming of the black liquor, either itself or in concentrated form (precipitated ligneous component) can be done by using a commercial surfactant or non-surfactant foaming chemical to foam water with air and then add as required the black liquor. This kind of application is known to the expert per se. However, not with the ligneous component.

Addition of the precipitated black liquor (ligneous component) to the pulp slurry immediately lowers the stock freeness, i.e. drainage rate as it holds or retains the fine suspended particles usually lost through drainage on the paper machine wire.

Addition of the black liquor to paper fibres in normal amounts up to 15% based on the solids and calculated on the dry weight of the fibre will increase the strength properties, i.e. burst strength and stiffness, in an approximate ratio of improvement of 1:1 to 2:1 for equal weight of cellulose fibre depending on the degree of openness of the fiber web making up the paper. When combined with the starch solution and added at high temperature (65°C or above) at the size press, a satisfactory sizing of the board (COBB 50) will be obtained, and the effectiveness of the starch on improving paper quality is greatly improved permitting reduced starch usage. A percentage of 0.4 to 0.6% of black liquor solids on the dry fibre content is sufficient.

Addition in its neutral form (up to 60% solids) to a solution of 20% neutralized urea and 20% fortified rosin size will obtain sizing properties essentially equal to that of the rosin size when used alone. This combination can be precipitated on fibre suspensions in the conventional manner with alum. The neutral form of the black liquor precipitate is hygroscopic when dried and can be used when combined with fast draining materials such as sandy soils to retain moisture and chemicals. When the fibre cooking process and subsequent precipitation is formulated with all or part of those three chemicals essential to plant life, nitrogen (nitric acid), potassium (potassium hydroxide) phosphorus (phosphoric acid), the black liquor becomes a complete fertilizer in itself in addition to its retention properties. This can be readily achieved by using potassium hydroxide in the alkaline extraction step and by precipitating the ligneous component out of the extraction liquor by using phosphoric acid. Official government tests show normal germination and growth rates for barley and oats when this liquor is added to an inert clay. For easy handling, it can be combined with diatomaceous earth to inhibit hygroscopic properties.

The acidified form of the black liquor, i.e. precipitant, can add its binding properties to such resins as melamine or phenolics permitting extension of these relatively expensive products. The neutral black

34

liquor can be used in the preparation of resins since its nitrated form is compatible chemically with that of many other resins. The acidified black liquor precipitant may be resolubilized by changing the pH to 7.5 with alkali and then again precipitated with acid at pH 5.5 making possible the concentration of the ligneous component through precipitation and then resolublizing for further use in a neutral form.

During the alkaline extraction step most of the lignin nitrate dissolves in the alkaline solution, leaving the fibrous structure softened and partially defiberized. At this point the concentrated black liquor should be drained off for recycling or purging from the system as required. Since little mechanical and/or explosive force has been exerted the point of fibre liberation will not have been reached under normal pulping conditions. Some of the ligneous component remains partially around the fibres, holding them together, but defibering can be readily accomplished by appropriate mechanical means, for example, by subjecting the softened structure to the action of a double disc defibrator or a deflaking unit, machines which will physically break apart the soft fibre bundles without causing substantial injury to the fibres themselves.

It is preferable after mechanical defibering except for animal feed and semi-chemical type pulps to wash the fibres with water to remove surface alkali and black liquor. Washing is preferably accomplished with a minimal amount of hot water, e.g. at a temperature of 85 to 100°C. The washing can be performed in any suitable manner. Following mechanical defibering and washing the cellulosic pulp can be subjected to a second nitration-extraction sequence, as discussed above, or it can be used in any of the conventional ways to make cellulosic fibre webs.

For pulps other than those intended for semi-chemical board or animal feed it will be necessary to screen the pulp, to remove any fibre bundles that withstood the pulping process, which bundles can then be returned to the nitration step or further defibering action.

Most commonly, the screened pulp will be supplied to the headbox of a paper machine, alone or in admixture with other types of fibres and there used to make paper products.

As previously stated, previous art using nitric acid, a highly aggressive agent, has employed high usage and concentrations and lengthy time of treatment particularly for wood. The use of an aluminium compound as an accelerator permits low consumption, low concentration and minimum processing time for wood fibre structures in particular and grassy fibrous structures.

The process of delignification serves to dissociate the fibres making up the natural fibre structure freeing the lignin and providing fibres which can be formed into a web for production of paper or board. On a modified or reduced scale of delignification in a relatively dry state (50% moisture) the lignin can be released in situ to act as a binder for the production of building board in which the fibrous structure remains essentially intact. Delignification will also increase the digestibility of fibrous structures by herbivores, cows and sheep etc. Animal feed is being produced commercially today from straw by addition of circa 5% NaOH to the dry weight of straw in a process which makes cubes or pellets with additional food additives. Additionally, work has been done with $NH_4OH$, liquid or gaseous $NH_3$, but this has not proven practical. Utilization of feed produced with NaOH is limited because the improvement in digestibility (food value) is low and the alkali content is high. An improvement to some 300% would be required to meet the food value of corn silage. Levels of improvement presently obtained processing straw are less than one tenth of this, and maximum utilization in the animals diet has not exceeded 15%.

This invention provides a controlled method of delignification which increased digestibility to the point that the processed straw can comprise a minimum of 50% of the animals total diet. Mixed during processing with other food supplements, molasses, dried milk, etc. a complete food can be formulated. Of equal importance is the potential of this process to be economic in small installations which further makes possible a joint production facility producing alternatively as required, animal feed and paper making fibre, providing flexibility to meet market demands local and long distance.

It is characteristic of agricultural residues that they are bulky making it impossible to meet minimum weight requirements of shipping carriers resulting in high freight costs. Processing under this invention makes viable the production of a compact finished or semi-finished product of high density which greatly reduces freight and handling cost.

For practicing the inventive process a variety of inexpensive mechanical installations widely varied from present conventional pulping systems becomes not only possible but preferable. Schematic diagrams of two such possibilities are shown in figures 1 and 2. Figure 1, an ultra simple process involving a modified hydrapulper for the production of pulp for paper which would provide an economic and viable unit for production levels as low as 10 tons (10,000 kg) per day. Figure 2 shows a completely flexible unit for the production of animal feed and for paper pulp utilizing hot air (which could be derived from burning agricultural residues) to achieve rapidly sufficient nitration temperatures (100°C) and the drying of the end product to a specific moisture level, as necessary.

The ability to spray or foam the nitrating liquid on dry agricultural residues makes possible a process that is essentially dry and permits the leaching out of the nitrated lignin after the alkaline liquor is added by spray or foam (an action that can follow immediately after the acid nitrating stage), when the moist mass (35—50% moisture) is subjected to heat and pressure. Enough lignin is released to provide a hardened binding material base sufficient to bind the shredded straw when subjected to an appropriate hardening agent such as alum and the usual pressures and temperatures used in the manufacture of flake board from wood residues. In this way an inexpensive building board, water resistant and stiff can be made from straw by generating its own binding materials eliminating the use of expensive resins such as phenolics.

## Claims for the Contracting States: DE GB FR IT NL

1. A process for pulping ligno-cellulosic material wherein said material is treated with aqueous nitric acid characterized by using an aqueous nitric acid solution having an $HNO_3$ concentration of 0.15 to 9.0 wt.% and containing an aluminum compound other than aluminum sulphate in an amount of at least 0.01 parts by weight of aluminum ions per each 10 parts by weight of $HNO_3$.

2. The process of claim 1 characterized by using an $HNO_3$ concentration of 0.15 to 5.5 wt.%.

3. The processs of claim 1 or 2 characterized in that the treatment with the aqueous nitric acid is carried out at a temperature from 85 to 100°C.

4. The process of claim 3 characterized by utilizing a temperature from 85 to 95°C. utilizing a temperature from 85 to 95°C.

5. The process of any of the preceding claims characterized in that the nitrated ligno-cellulosic material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt.% NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at temperatures from 85 to 110°C.

10. The process of any of claims 1, 2 and 5 and 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separated from the nitric acid solution and subjected to a water wash.

12. The process of any of claims 1 to 11 characterized in that said aluminum compound is present in an amount from 0.065 to 0.105 parts by weight of aluminum ions per each 10 parts by weight of $HNO_3$.

## Patentansprüche für die Vertragsstaaten: DE GB FR IT NL

1. Verfahren zum Aufschluß von lignocellulosehaltigem Material, wobei das Material einer Behandlung mit wässriger Salpetersäure unterworfen wird, dadurch gekennzeichnet, daß man eine wässrige Salpetersäurelöseung mit einer $HNO_3$-Konzentration von 0,15 bis 9,0 Gew.-% verwendet, die eine andere Aluminumverbindung als Aluminiumsulfat in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine $HNO_3$-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulose-haltige Material der Behandlung mit einer alkalischen Extraktionsflüssigkeit zur Herauslösung der Ligninkomponente aus dem Material unter Erhalt eines Cellulose-breies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalische Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen Extraktionsstufe das nitrierte lignocellulosehaltige

Board Composition

|  | % |
|---|---|
| Defibered unscreened pulp | 42 |
| Mixed waste fiber | 33 |
| Unmodified lignin solids | 25 |

Test Results — Produced on Paper Machine

| | |
|---|---|
| Basis weight, gr/m² | 105 |
| Mullen index, kPa | 233 |
| Elmendorf tear, MD/CD—MN | 677/716 |
| Concora, kg p | 158 |

Example 14

A non-pressure process using an open hydrapulper producing a bleachable straw pulp.

| | |
|---|---|
| Wheat straw | Mechanically shredded |
| Charge | 1.2 kg Atro |
| Impregnation time | 15 minutes |
| Impregnation chemical | 0.5% HNO₃ conc. |
| Impregnation temperature | 50°C |
| Cooking time | 15 minutes |
| Cooking chemical | 1.5% HNO₃ conc. |
| Cooking temperature | 95°C |
| Delignification | 15 minutes, NaOH to pH 12—95°C |

Test Results — Produced on Paper Machine

| | |
|---|---|
| Basis weight, gr/m² | 180 |
| Mullen Index, KPA | 495 |
| Elmendorf tear, MD/CD—MN | 739/848 |
| Schopper Riegler, degrees | 50 |
| Kappa, No. | 16 |

**Claims for the Contracting States: AT BE SE**

1. A process for pulping ligno-cellulosic material wherein said material is treated with aqueous nitric acid characterized by using an aqueous nitric acid solution having an HNO₃ concentration of 0.15 to 9.0 wt. % and containing an aluminum compound in an amount of at least 0.01 parts by weight of aluminum ions per each 10 parts by weight of HNO₃.

2. The process of claim 1 characterized by using an HNO₃ concentration of 0.15 to 5.5 wt.%.

3. The process of claim 1 or 2 characterized in that the treatment with the aqueous nitric acid is carried out at a temperature from 85 to 100°C.

4. The process of claim 3 characterized by utilizing a temperature from 85 to 95°C.

5. The process of any of the preceding claims characterized in that the nitrated ligno-cellulosic material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt. % NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at a temperature from 85 to 110°C.

10. The process of any of claims 1, 2 and 5 to 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separation from the nitric acid solution and subjected to a water wash.

12. The process of any of the preceding claims characterized in that said aluminum compound is present in an amount from 0.065 to 0.105 parts by weight of aluminum ions per each 10 parts of $HNO_3$.

13. The process of any of the preceding claims characterized in that said aluminum compound is aluminum sulphate.

14. The process of claim 13 characterized in that the amount of aluminum sulphate is from 0.8 to 1.3 parts by weight for each 10 parts by weight of $HNO_3$.

**Patentansprüche für die Vertragsstaaten: AT, BE, SE**

1. Verfahren zum Aufschluß von lignocellulosehaltigem Material, wobei das Material einer Behandlung mit wässriger Salpertersäure unterworfen wird, dadurch gekennzeichnet, daß man eine wässrige Salpetersäurelöseung mit einer $HNO_3$-Konzentration von 0,15 bis 9,0 Gew.-% verwendet, die eine Aluminiumverbindung in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine $HNO_3$-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulosehaltige Material der Behandlung mit einer alkalischen Extraktionsflüssigkeit zur Herauslösung der Ligninkomponente aus dem Material unter Erhalt eines Cellulosebreies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalischen Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen extraktionsstufe das nitrierte lignocellulosehaltige Material von der Salpetersäurelösung abtrennt und einer Wasserwäsche unterwirft.

12. Verfahren nach einem der vorhergehenden Ansprüche, dadurch gekennzeichnet, daß die Aluminiumverbindung in einer Menge von 0,065 bis 0,105 Gewichtsteile Aluminiumionen pro 10 Teile $HNO_3$ anwesend ist.

13. Verfahren nach einem der vorhergehenden Ansprüche, dadurch gekennzeichnet, daß die Aluminiumverbindung Aluminiumsulfat ist.

14. Verfahren nach Anspruch 13, dadurch gekennzeichnet, daß die Menge des Aluminiumsulfats 0,8 bis 1,3 Gewichtsteile pro 10 Gewichtsteile $HNO_3$ beträgt.

**Revendications pour les Etats contractants: AT BE SE**

1. Procédé pour réduire en pulpe une matière lignocellulosique où ladite matière est traitée avec

# 0 022 881

facture of flake board from wood residues. In this way an inexpensive building board, water resistant and stiff can be made from straw by generating its own binding materials eliminating the use of expensive resins such as phenolics.

**Claims for the Contracting States: DE GB FR IT NL**

1. A process for pulping ligno-cellulosic material wherein said material is treated with aqueous nitric acid characterized by using an aqueous nitric acid solution having an HNO₃ concentration of 0.15 to 9.0 wt.% and containing an aluminum compound other than aluminum sulphate in an amount of at least 0.01 parts by weight of aluminum ions per each 10 parts by weight of $HNO_3$.

2. The process of claim 1 characterized by using an $HNO_3$ concentration of 0.15 to 5.5 wt.%.

3. The processs of claim 1 or 2 characterized in that the treatment with the aqueous nitric acid is carried out at a temperature from 85 to 100°C.

4. The process of claim 3 characterized by utilizing a temperature from 85 to 95°C. utilizing a temperature from 85 to 95°C.

5. The process of any of the preceding claims characterized in that the nitrated ligno-cellulosic material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt.% NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at temperatures from 85 to 110°C.

10. The process of any of claims 1, 2 and 5 and 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separated from the nitric acid solution and subjected to a water wash.

12. The process of any of claims 1 to 11 characterized in that said aluminum compound is present in an amount from 0.065 to 0.105 parts by weight of aluminum ions per each 10 parts by weight of $HNO_3$.

**Patentansprüche für die Vertragsstaaten: DE GB FR IT NL**

1. Verfahren zum Aufschluß von lignocellulosehaltigem Material, wobei das Material einer Behandlung mit wässriger Salpetersäure unterworfen wird, dadurch gekennzeichnet, daß man eine wässrige Salpetersäurelöseung mit einer HNO₃-Konzentration von 0,15 bis 9,0 Gew.-% verwendet, die eine andere Aluminumverbindung als Aluminiumsulfat in einer Menge von mindestens 0,01 Gewichtsteil Aluminiumionen pro 10 Gewichtsteile HNO₃ enthält.

2. Verfahren nach Anspruch 1, dadurch gekennzeichnet, daß man eine HNO₃-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulose-haltige Material der Behandlung mit einer alkalischen Extraktionsflüssigkeit zur Herauslösung der Ligninkomponente aus dem Material unter Erhalt eines Cellulose-breies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalische Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen Extraktionsstufe das nitrierte lignocellulosehaltige

36

material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt. % NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at a temperature from 85 to 110°C.

10. The process of any of claims 1, 2 and 5 to 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separation from the nitric acid solution and subjected to a water wash.

12. The process of any of the preceding claims characterized in that said aluminum compound is present in an amount from 0.065 to 0.105 parts by weight of aluminum ions per each 10 parts of $HNO_3$.

13. The process of any of the preceding claims characterized in that said aluminum compound is aluminum sulphate.

14. The process of claim 13 characterized in that the amount of aluminum sulphate is from 0.8 to 1.3 parts by weight for each 10 parts by weight of $HNO_3$.

**Patentansprüche für die Vertragsstaaten: AT, BE, SE**

1. Verfahren zum Aufschluß von lignocellulosehaltigem Material, wobei das Material einer Behandlung mit wässriger Salpertersäure unterworfen wird, dadurch gekennzeichnet, daß man eine wässrige Salpetersäurelöseung mit einer $HNO_3$-Konzentration von 0,15 bis 9,0 Gew.-% verwendet, die eine Aluminiumverbindung in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine $HNO_3$-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulosehaltige Material der Behandlung mit einer alkalischen Extraktionsflüssigkeit zur Herauslösung der Ligninkomponente aus dem Material unter Erhalt eines Cellulosebreies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalischen Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen extraktionsstufe das nitrierte lignocellulosehaltige Material von der Salpetersäurelösung abtrennt und einer Wasserwäsche unterwirft.

12. Verfahren nach einem der vorhergehenden Ansprüche, dadurch gekennzeichnet, daß die Aluminiumverbindung in einer Menge von 0,065 bis 0,105 Gewichtsteile Aluminiumionen pro 10 Teile $HNO_3$ anwesend ist.

13. Verfahren nach einem der vorhergehenden Ansprüche, dadurch gekennzeichnet, daß die Aluminiumverbindung Aluminiumsulfat ist.

14. Verfahren nach Anspruch 13, dadurch gekennzeichnet, daß die Menge des Aluminiumsulfats 0,8 bis 1,3 Gewichtsteile pro 10 Gewichtsteile $HNO_3$ beträgt.

**Revendications pour les Etats contractants: AT BE SE**

1. Procédé pour réduire en pulpe une matière lignocellulosique où ladite matière est traitée avec

## O 022 881

facture of flake board from wood residues. In this way an inexpensive building board, water resistant and stiff can be made from straw by generating its own binding materials eliminating the use of expensive resins such as phenolics.

## Claims for the Contracting States: DE GB FR IT NL

1. A process for pulping ligno-cellulosic material wherein said material is treated with aqueous nitric acid characterized by using an aqueous nitric acid solution having an $HNO_3$ concentration of 0.15 to 9.0 wt.% and containing an aluminum compound other than aluminum sulphate in an amount of at least 0.01 parts by weight of aluminum ions per each 10 parts by weight of $HNO_3$.

2. The process of claim 1 characterized by using an $HNO_3$ concentration of 0.15 to 5.5 wt.%.

3. The processs of claim 1 or 2 characterized in that the treatment with the aqueous nitric acid is carried out at a temperature from 85 to 100°C.

4. The process of claim 3 characterized by utilizing a temperature from 85 to 95°C. utilizing a temperature from 85 to 95°C.

5. The process of any of the preceding claims characterized in that the nitrated ligno-cellulosic material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt.% NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at temperatures from 85 to 110°C.

10. The process of any of claims 1, 2 and 5 and 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separated from the nitric acid solution and subjected to a water wash.

12. The process of any of claims 1 to 11 characterized in that said aluminum compound is present in an amount from 0.065 to 0.105 parts by weight of aluminum ions per each 10 parts by weight of $HNO_3$.

## Patentansprüche für die Vertragsstaaten: DE GB FR IT NL

1. Verfahren zum Aufschluß von lignocellulosehaltigem Material, wobei das Material einer Behandlung mit wässriger Salpetersäure unterworfen wird, dadurch gekennzeichnet, daß man eine wässrige Salpetersäurelöseung mit einer $HNO_3$-Konzentration von 0,15 bis 9,0 Gew.-% verwendet, die eine andere Aluminumverbindung als Aluminiumsulfat in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine $HNO_3$-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulose-haltige Material der Behandlung mit einer alkalischen Extraktionsflüssigkeit zur Herauslösung der Ligninkomponente aus dem Material unter Erhalt eines Cellulose-breies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalische Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen Extraktionsstufe das nitrierte lignocellulosehaltige

36

Material von der Salpetersäurelösung abtrennt und einer Wasserwäsche unterwirft.

12. Verfahren nach einem der Ansprüche 1 bis 11, dadurch gekennzeichnet, daß die Aluminiumverbindung in einer Menge von 0,065 bis 0,105 Gewichtsteile Aluminiumionen pro 10 Gewichtsteile $HNO_3$ anwesend ist.

**Revendications pour les Etats contractants: DE GB FR IT NL**

1. Procédé pour réduire en pulpe une matière lignocellulosique où ladite matière est traitée avec de l'acide nitrique aqueux, caractérisé en ce qu'on utilise une solution aqueuse d'acide nitrique ayant une concentration en $HNO_3$ de 0,15 à 9,0% en poids et contenant un composé d'aluminium autre que du sulfate d'aluminium en une quantité d'au moins 0,01 partie en poids d'ions aluminium pour 10 parties en poids de $HNO_3$.

2. Procédé selon la revendication 1, caractérisé en ce qu'on utilise une concentration en $HNO_3$ de 0.15 à 5,5% en poids.

3. Procédé selon la revendication 1 ou 2, caractérisé en ce que le traitement avec l'acide nitrique aqueux est effectué à une température de 85 à 100°C.

4. Procédé selon la revendication 3, caractérisé en ce qu'on utilise une température de 85 à 95°C.

5. Procédé selon l'une quelconque des revendications précédentes, caractérisé en ce que la matière ligno-cellulosique nitratée obtenue par le traitement avec l'acide nitrique aqueux est soumise à un traitement avec une liqueur alcaline d'extraction pour dissoudre le composant ligneux de la matière pour obtenir une pulpe cellulosique.

6. Procédé selon la revendication 5, caractérisé en ce que ladite extraction est effectuée à une température de 75 à 100°C.

7. Procédé selon la revendication 5 ou 6, caractérisé en ce que ladite extraction alcaline est effectuée avec une liqueur d'extraction contenant de 0,1 à 0,5% en poids de NaOH.

8. Procédé selon l'une quelconque des revendications précédentes, caractérisé en ce que l'étape de nitration et l'étape d'extraction alcaline sont toutes deux effectuées en conditions de pression atmosphérique.

9. Procédé selon l'une quelconque des revendications 1, 2 et 5 à 8, caractérisé en ce que l'étape de nitration est effectuée à une pression de 103 à 241 kPa et à des températures de 85 à 110°C.

10. Procédé selon l'une quelconque des revendications 1, 2 et 5 à 8, caractérisé en ce que l'étape de nitration est effectuée à une pression de 0,70 à 1,03 MPa et à une température de 85 à 100°C.

11. Procédé selon l'une quelconque des revendications 1 à 10, caractérisé en ce qu'à la suite de l'étape de nitration et avant l'étape d'extraction alcaline, la matière lignocellulosique nitratée est séparée de la solution d'acide nitrique et est soumise à un lavage à l'eau.

12. Procédé selon l'une quelconque des revendications 1 à 11, caractérisé en ce que ledit composé d'aluminium est présent en une quantité de 0,065 à 0,105 partie en poids d'ions aluminium pour 10 parties en poids de $HNO_3$.

# O 022 881

material obtained from the treatment with the aqueous nitric acid is subjected to treatment with an alkaline extraction liquor to dissolve the ligneous component out of the material to obtain a cellulosic pulp.

6. The process of claim 5 characterized in that said extraction is carried out at a temperature from 75 to 100°C.

7. The process of claim 5 or 6 characterized in that said alkaline extraction is carried out with an extraction liquor containing from 0.1 to 0.5 wt. % NaOH.

8. The process of any of the preceding claims characterized in that the nitrating step and the alkaline extraction step are both carried out under atmospheric pressure conditions.

9. The process of any of claims 1, 2 and 5 to 8 characterized in that the nitration step is carried out at a pressure from 103 to 241 kPa and at a temperature from 85 to 110°C.

10. The process of any of claims 1, 2 and 5 to 8 characterized in that the nitration step is carried out at a pressure from 0.70 to 1.03 MPa and at a temperature from 85 to 100°C.

11. The process of any of claims 1 to 10 characterized in that, following the nitration step and before the alkaline extraction step the nitrated ligno-cellulosic material is separation from the nitric acid solution and subjected to a water wash.

12. The process of any of the preceding claims characterized in that said aluminum compound is present in an amount from 0.065 to 0.105 parts by weight of aluminum ions per each 10 parts of $HNO_3$.

13. The process of any of the preceding claims characterized in that said aluminum compound is aluminum sulphate.

14. The process of claim 13 characterized in that the amount of aluminum sulphate is from 0.8 to 1.3 parts by weight for each 10 parts by weight of $HNO_3$.

**Patentansprüche für die Vertragsstaaten: AT, BE, SE**

1. Verfahren zum Aufschluß von lignocellulosehaltigem Material, wobei das Material einer Behandlung mit wässriger Salpertersäure unterworfen wird, dadurch gekennzeichnet, daß man eine wässrige Salpetersäurelöseung mit einer $HNO_3$-Konzentration von 0,15 bis 9,0 Gew.-% verwendet, die eine Aluminiumverbindung in einer Menge von mindestens 0,01 Gewichtsteil Aluminiumionen pro 10 Gewichtsteile $HNO_3$ enthält.

2. Verfahren nach Anspruch 1, dadurch gekennzeichnet, daß man eine $HNO_3$-Konzentration von 0,15 bis 5,5 Gew.-% anwendet.

3. Verfahren nach Anspruch 1 oder 2, dadurch gekennzeichnet, daß man die Behandlung mit der wässrigen Salpetersäure bei Temperaturen von 85 bis 100°C durchführt.

4. Verfahren nach Anspruch 3, dadurch gekennzeichnet, daß man Temperaturen von 85 bis 95°C anwendet.

5. Verfahren nach einem der vorhergehenden Ansprüche, dadurch gekennzeichnet, daß man das durch Behandlung mit der wässrigen Salpetersäure erhaltene lignocellulosehaltige Material der Behandlung mit einer alkalischen Extraktionsflüssigkeit zur Herauslösung der Ligninkomponente aus dem Material unter Erhalt eines Cellulosebreies unterwirft.

6. Verfahren nach Anspruch 5, dadurch gekennzeichnet, daß man die Extraktion bei Temperaturen von 75 bis 100°C durchführt.

7. Verfahren nach Anspruch 5 oder 6, dadurch gekennzeichnet, daß man die alkalischen Extraktion mit einer Extraktionsflüssigkeit durchführt, die 0,1 bis 0,5 Gew.-% NaOH enthält.

8. Verfahren nach einem der vorhergehenden Ansprüche, dadurch gekennzeichnet, daß man sowohl die Nitrierstufe als auch die alkalische Extraktionsstufe unter Atmosphärendruck durchführt.

9. Verfahren nach einem der Ansprüche 1, 2 und 5 bis 8, dadurch gekennzeichnet, daß man die Nitrierstufe bei Drücken von 107 bis 241 kPa und Temperaturen von 85 bis 110°C durchführt.

10. Verfahren nach einem der Ansprüche 1, 2 und 5 bis 8, dadurch gekennzeichnet, daß man die Nitrierstufe bei Drücken von 0,70 bis 1,03 MPa und Temperaturen von 85 bis 100°C durchführt.

11. Verfahren nach einem der Ansprüche 1 bis 10, dadurch gekennzeichnet, daß man im Anschluß an die Nitrierstufe und vor der alkalischen extraktionsstufe das nitrierte lignocellulosehaltige Material von der Salpetersäurelösung abtrennt und einer Wasserwäsche unterwirft.

12. Verfahren nach einem der vorhergehenden Ansprüche, dadurch gekennzeichnet, daß die Aluminiumverbindung in einer Menge von 0,065 bis 0,105 Gewichtsteile Aluminiumionen pro 10 Teile $HNO_3$ anwesend ist.

13. Verfahren nach einem der vorhergehenden Ansprüche, dadurch gekennzeichnet, daß die Aluminiumverbindung Aluminiumsulfat ist.

14. Verfahren nach Anspruch 13, dadurch gekennzeichnet, daß die Menge des Aluminiumsulfats 0,8 bis 1,3 Gewichtsteile pro 10 Gewichtsteile $HNO_3$ beträgt.

**Revendications pour les Etats contractants: AT BE SE**

1. Procédé pour réduire en pulpe une matière lignocellulosique où ladite matière est traitée avec

21

**0 022 881**

de l'acide nitrique aqueux, caractérisé en ce qu'on utilise une solution aqueuse d'acide nitrique ayant une concentration en $HNO_3$ de 0,15 à 9,0% en poids et contenant un composé d'aluminium en une quantité d'au moins 0,01 partie en poids d'ions aluminium pour 10 parties en poids de $HNO_3$.

2. Procédé selon la revendication 1, caractérisé en ce qu'on utilise une concentration en $HNO_3$ de 0,15 à 5,5% en poids.

3. Procédé selon la revendication 1 ou 2, caractérisé en ce que le traitement avec l'acide nitrique aqueux est effectué à une température de 85 à 100°C.

4. Procédé selon la revendication 3, caractérisé en ce qu'on utilise une température de 85 à 95°C.

5. Procédé selon l'une quelconque des revendications précédentes, caractérisé en ce que la matière ligno-cellulosique nitratée obtenue par le traitement avec l'acide nitrique aqueux est soumise à un traitement avec une liqueur alcaline d'extraction pour dissoudre le composant ligneux de la matière pour obtenir une pulpe cellulosique.

6. Procédé selon la revendication 5, caractérisé en ce que ladite extraction est effectuée à une température de 75 à 100°C.

7. Procédé selon la revendication 5 ou 6, caractérisé en ce que ladite extraction alcaline est effectuée avec une liqueur d'extraction contenant de 0,1 à 0,5% en poids de NaOH.

8. Procédé selon l'une quelconque des revendications précédentes, caractérisé en ce que l'étape de nitration et l'étape d'extraction alcaline sont toutes deux effectuées en conditions de pression atmosphérique.

9. Procédé selon l'une quelconque des revendications 1, 2 et 5 à 8, caractérisé en ce que l'étape de nitration est effectuée à une pression de 103 à 241 kPa et à une température de 85 à 110°C.

10. Procédé selon l'une quelconque des revendications 1, 2 et 5 à 8, caractérisé en ce que l'étape de nitration est effectuée à une pression de 0,70 à 1,03 MPa et à une température de 85 à 100°C.

11. Procédé selon l'une quelconque des revendications 1 à 10, caractérisé en ce qu'à la suite de l'étape de nitration et avant l'étape d'extraction alcaline, la matière lignocellulosique nitratée est séparée de la solution d'acide nitrique est est soumise à un lavage à l'eau.

12. Procédé selon l'une quelconque des revendications 1 à 11, caractérisé en ce que ledit composé d'aluminium est présent en une quantité de 0,065 à 0,105 partie en poids d'ions aluminium pour 10 parties en poids de $HNO_3$.

13. Procédé selon l'une quelconque des revendications précédentes, caractérisé en ce que ledit composé d'aluminium est du sulfate d'aluminium.

14. Procédé selon la revendication 13, caractérisé en ce que la quantité de sulfate d'aluminium est comprise entre 0,8 et 1,3 parties en poids pour 10 parties en poids de $HNO_3$.

22

Material von der Salpetersäurelösung abtrennt und einer Wasserwäsche unterwirft.

12. Verfahren nach einem der Ansprüche 1 bis 11, dadurch gekennzeichnet, daß die Aluminiumverbindung in einer Menge von 0,065 bis 0,105 Gewichtsteile Aluminiumionen pro 10 Gewichtsteile $HNO_3$ anwesend ist.

**Revendications pour les Etats contractants: DE GB FR IT NL**

1. Procédé pour réduire en pulpe une matière lignocellulosique où ladite matière est traitée avec de l'acide nitrique aqueux, caractérisé en ce qu'on utilise une solution aqueuse d'acide nitrique ayant une concentration en $HNO_3$ de 0,15 à 9,0% en poids et contenant un composé d'aluminium autre que du sulfate d'aluminium en une quantité d'au moins 0,01 partie en poids d'ions aluminium pour 10 parties en poids de $HNO_3$.

2. Procédé selon la revendication 1, caractérisé en ce qu'on utilise une concentration en $HNO_3$ de 0.15 à 5,5% en poids.

3. Procédé selon la revendication 1 ou 2, caractérisé en ce que le traitement avec l'acide nitrique aqueux est effectué à une température de 85 à 100°C.

4. Procédé selon la revendication 3, caractérisé en ce qu'on utilise une température de 85 à 95°C.

5. Procédé selon l'une quelconque des revendications précédentes, caractérisé en ce que la matière ligno-cellulosique nitratée obtenue par le traitement avec l'acide nitrique aqueux est soumise à un traitement avec une liqueur alcaline d'extraction pour dissoudre le composant ligneux de la matière pour obtenir une pulpe cellulosique.

6. Procédé selon la revendication 5, caractérisé en ce que ladite extraction est effectuée à une température de 75 à 100°C.

7. Procédé selon la revendication 5 ou 6, caractérisé en ce que ladite extraction alcaline est effectuée avec une liqueur d'extraction contenant de 0,1 à 0,5% en poids de NaOH.

8. Procédé selon l'une quelconque des revendications précédentes, caractérisé en ce que l'étape de nitration et l'étape d'extraction alcaline sont toutes deux effectuées en conditions de pression atmosphérique.

9. Procédé selon l'une quelconque des revendications 1, 2 et 5 à 8, caractérisé en ce que l'étape de nitration est effectuée à une pression de 103 à 241 kPa et à des températures de 85 à 110°C.

10. Procédé selon l'une quelconque des revendications 1, 2 et 5 à 8, caractérisé en ce que l'étape de nitration est effectuée à une pression de 0,70 à 1,03 MPa et à une température de 85 à 100°C.

11. Procédé selon l'une quelconque des revendications 1 à 10, caractérisé en ce qu'à la suite de l'étape de nitration et avant l'étape d'extraction alcaline, la matière lignocellulosique nitratée est séparée de la solution d'acide nitrique et est soumise à un lavage à l'eau.

12. Procédé selon l'une quelconque des revendications 1 à 11, caractérisé en ce que ledit composé d'aluminium est présent en une quantité de 0,065 à 0,105 partie en poids d'ions aluminium pour 10 parties en poids de $HNO_3$.

**Fig. 1**

WOOD-FLAKES

STRAW

WATER WITH OR WITHOUT CHEMICALS

SPRAY

DEFIBRATOR

DEFIBRATOR

PRESSPLATE

HYDRA-PULPER

COOKING

MAX. 100°C

COOKING CHEMICALS

IMPREGNATION LIQUOR

LIQUOR

1.WASH

2.WASH

FRESH WATER

BLACK LIQUOR

ALKALI

BLACK LIQUOR CONC.

CLEAR WATER

LIGNIN

PAPER MACHINE

SCREENING

WASH-THICKENER

DOUBLE DISK REFINER

BAND-FILTER

THICKENER

TANK

TANK

FERTILIZER PAPER MACHINE

DILUTE BLACK LIQUOR

0 022 881

Fig. 2

FIG. 3